# EUROPÄISCHE PATENTANMELDUNG

(11) **EP 4 530 775 A1**
(43) Veröffentlichungstag der Anmeldung: **02.04.2025**
(21) Anmeldenummer: 23200085.1
(22) Anmeldetag: 27.09.2023
(51) Int. Cl.: G05B 19/418

(54) **VERFAHREN UND SYSTEM ZUM NACHVERFOLGEN VON ORTEN AUF EINER MATERIALBAHN**

(71) Anmelder: Siemens Aktiengesellschaft, 80333 München (DE)
(72) Erfinder: Mack, Christian, 91056 Erlangen-Dechsendorf (DE); Mose, Christian, 81476 München (DE); Otte, Clemens, 81739 München (DE); Witt, Jonas, 90419 Nürnberg (DE); Botero Halblaub, Andrés, 85614 Kirchseeon (DE); Pohle, Roland, 85570 Herdweg (DE)
(74) Vertreter: Siemens Patent Attorneys

(57) **Zusammenfassung**

Die vorliegende Erfindung betrifft ein Verfahren zum Nachverfolgen von Orten (w1, w2, w3) auf einer Materialbahn (120, 122, 124) im Rahmen einer Bearbeitung der Materialbahn (120, 122, 124), umfassend die Schritte:
a. Erfassen von ersten Messdaten (300) eines ersten Oberflächenbereichs (w1) der Materialbahn (120) unter Verwendung einer ersten Erfassungseinrichtung (150) zu einem ersten Zeitpunkt,
b. Erfassen von zweiten Messdaten eines zweiten Oberflächenbereichs (w2, w3) der Materialbahn (120, 122, 124) unter Verwendung der ersten Erfassungseinrichtung (150) zu einem nach dem ersten Zeitpunkt liegenden zweiten Zeitpunkt,
c. Bearbeiten der Materialbahn (120, 122, 124) in einem Prozessschritt,
d. Identifizieren des ersten Oberflächenbereichs (s1) auf der bearbeiteten Materialbahn (124) unter Verwendung einer zweiten Erfassungseinrichtung (160) sowie der ersten und/oder zweiten Messdaten (300),
e. Identifizieren des zweiten Oberflächenbereichs (s5, S9) auf der bearbeiteten Materialbahn (124) unter Verwendung der zweiten Erfassungseinrichtung (160), der ersten und/oder zweiten Messdaten (300) sowie des ersten und zweiten Zeitpunkts.

## Beschreibung

Die vorliegende Erfindung betrifft ein Verfahren und System zum Nachverfolgen von Orten auf einer Materialbahn im Rahmen einer Bearbeitung der Materialbahn unter Verwendung von Messdaten bezüglich Oberflächenbereichen.

Derartige Systeme sind aus dem Stand der Technik bekannt.

So offenbart beispielsweise der Artikel "Integration of Traceability Systems in Battery Production" (Günther Riexinger et al., Procedia CIRP, Band 93, 2020, Seiten 125-130, ISSN 2212-8271, https://doi.org/10.1016/j.procir.2020.04.002. (https://www.sciencedirect.com/science/article/pii/S221282712 030531X)) Beispiele für Rückverfolgbarkeitskonzepten mit Fokus auf Identifikationstechnologien in der Batterieproduktion. In diesem Beitrag werden die entwickelte Rückverfolgungskonzepte und ihre Implementierungsbeispiele vorgestellt. Beispiele sind z.B. Verfahren, um ein Objekt oder Produktionselement zu identifizieren, indem inhärente Objekteigenschaften oder aufgebrachte Identifikationsmarker entsprechend nachverfolgt werden.

Es ist ein Nachteil des genannten Standes der Technik, dass die bekannten Verfahren immer noch Nachteile in Bezug auf die Erkennungsgenauigkeit von Identifikations-Stellen oder Identifikations-Markierungen auf Produkten im Rahmen von zugehörigen Produktionsprozessen haben. Ein Grund dafür ist, dass sich Produktionsprozesse auf die genannten Identifikations-Stellen oder -Markierungen auswirken können und diese dann nicht mehr genau den ursprünglich vorhandenen Identifikations-Stellen oder -Markierungen entsprechen.

Daher ist es eine Aufgabe der vorliegenden Erfindung, ein Verfahren und/oder ein System zur Verfügung zu stellen, mit welchem sich die Erkennungsgenauigkeit von Identifikations-Stellen und/oder -Markierungen eines Produkts auch im Rahmen der Produktion des Produkts verbessern lässt.

Diese Aufgabe wird gelöst durch ein Verfahren mit den Merkmalen des Patentanspruchs 1.

Ein solches Verfahren ist zum Nachverfolgen von Orten auf einer Materialbahn im Rahmen einer Bearbeitung der Materialbahn ausgebildet und eingerichtet und umfasst die Schritte:
a. Erfassen von ersten Messdaten eines ersten Oberflächenbereichs der Materialbahn unter Verwendung einer ersten Erfassungseinrichtung zu einem ersten Zeitpunkt,
b. Erfassen von zweiten Messdaten eines zweiten Oberflächenbereichs der Materialbahn unter Verwendung der ersten Erfassungseinrichtung zu einem nach dem ersten Zeitpunkt liegenden zweiten Zeitpunkt,
c. Bearbeiten der Materialbahn in einem Prozessschritt,
d. Identifizieren des ersten Oberflächenbereichs auf der bearbeiteten Materialbahn unter Verwendung einer zweiten Erfassungseinrichtung sowie der ersten und/oder zweiten Messdaten,
e. Identifizieren des zweiten Oberflächenbereichs auf der bearbeiteten Materialbahn unter Verwendung der zweiten Erfassungseinrichtung, der ersten und/oder zweiten Messdaten sowie des ersten und zweiten Zeitpunkts.

Das Verfahren kann z.B. als ein computerimplementiertes Verfahren ausgebildet und eingerichtet sein. Weiterhin können alle Verfahrensschritte des Verfahrens als computerimplementierte Verfahrensschritte ausgebildet und eingerichtet sein. Es kann auch vorgesehen sein, eine Auswahl der Verfahrensschritte des Verfahrens als computerimplementierte Verfahrensschritte oder computerunterstützte Verfahrensschritte ausgebildet und eingerichtet sind.

Weiterhin müssen die Verfahrensschritte des genannten Verfahrens nicht zwangsläufig hintereinander oder in der vorgegebenen Reihenfolge ablaufen. Können beispielsweise teilweise auch gleichzeitig oder auch in einer anderen Reihenfolge ablaufen. Weiterhin kann vorgesehen sein, dass zwischen den Verfahrensschritten jeweils weitere Verfahrensschritte ablaufen oder vorgesehen sind.

Das Verfahren ist weiterhin derart ausgestaltet und eingerichtet, dass das Erfassen der ersten Messdaten des ersten Oberflächenbereichs gemäß Verfahrensschritt a. sowie das Erfassen der zweiten Messdaten des zweiten Oberflächenbereichs gemäß Verfahrensschritt b. vor dem Bearbeiten der Materialbahn gemäß Verfahrensschritt c. erfolgt. Dabei kann das Verfahren beispielsweise derart ausgebildet und eingerichtet sein, dass das Erfassen der ersten Messdaten des ersten Oberflächenbereichs sowie das Erfassen der zweiten Messdaten des zweiten Oberflächenbereichs jeweils von der unbearbeiteten Materialbahn erfolgt.

Dadurch, dass zum Identifizieren von Oberflächenbereichen einer Materialbahn nach einem Bearbeiten dieser Materialbahn in einem Prozessschritt, sowohl erfasste Messdaten bezüglich des jeweiligen Oberflächenbereichs als auch Erfassungszeitpunkte der Messdatenerfassung herangezogen werden, wird das Identifizieren der Oberflächenbereiche nach der Bearbeitung verbessert.

So kann beispielsweise unter Verwendung der erfassten Messdaten vor und nach den Prozessschritt ein Ähnlichkeitsvergleich erfolgen. Weiterhin kann die Erkennung dahingehend verbessert werden, dass durch Verwendung der Erfassungszeitpunkte beispielsweise zeitliche und/oder räumliche Abstände verschiedener erfasster Oberflächenbereiche ermittelbar sind, anhand welcher sich dann beispielsweise die Lage von möglicherweise erkannten Oberflächenbereichen weiter einengen lässt. Sind zum Beispiel Abstände zwischen verschiedenen Oberflächenbereichen vor einer Bearbeitung bekannt und wurde ein erster dieser Oberflächenbereiche nach der Bearbeitung bereits wiedererkannt, so lässt sich der zweite dieser Oberflächenbereiche nach der Bearbeitung erheblich genauer bestimmen, wenn sowohl die Messdaten dieses zweiten Oberflächenbereichs vor und nach der Bearbeitung verglichen werden als auch räumliche Positionen dieses Oberflächenbereichs anhand des bekannten Abstands eingeengt werden.

Der vorstehend genannte Ähnlichkeitsvergleich liefert häufiger sogenannte "falsch positive" Ergebnisse. Diese sogenannten "False Positives" sind Oberflächenbereiche der bearbeiteten Materialbahn, die fälschlicherweise als ein anderer Oberflächenbereich der unbearbeiteten Materialbahn identifiziert wurde. Gründe für solche "Fehlalarme" können Mehrdeutigkeiten beispielsweise von im Rahmen eines solchen Ähnlichkeitsvergleichs verwendeten visuellen Fingerabdrücken sein, z.B. aufgrund von unvollkommenen Bildern (bzgl. Größe, Auflösung, Lichtverhältnisse, Rauschen), und die Notwendigkeit, eher niedrige Erkennungsschwellen zu verwenden, um eine ausreichende Identifizierung von Oberflächenbereichen zu erreichen.

Die falsch positiven Ergebnisse können z.B. wie folgt gefiltert werden: Jedem Oberflächenbereich auf der Materialbahn ist eine Längsposition (z.B. in Metern) auf der Bahn zugeordnet. Die Position kann aus einem Zeitstempel (z.B. dem ersten und/oder zweiten Zeitpunkt) der zugehörigen Messdaten (z.B. eines Bildes) und einem Meterzähler berechnet werden, wobei letzterer auch aus der über die Zeit integrierten Geschwindigkeit der bewegten Elektrodenbahn abgeleitet werden kann. Anhand der Positionen können dann beispielsweise die Längsabstände zwischen den Oberflächenbereichen berechnet werden.

Dabei kann die Materialbahn aus jedem möglichen Material bestehen, welches sich als Materialbahn formen, herstellen und/oder bearbeiten lässt. Beispielsweise können dies derartige Materialien sein, die entsprechend ausgebildet und eingerichtet sind, dass sie beispielsweise auf eine und/oder von einer Rolle abwickelbar sind. Häufig handelt es sich dabei um sehr lange und vergleichsweise dünne Materialbahnen. Solche Materialbahnen können beispielsweise aus Kunststoffen, Metallen, Geweben, Papier oder vergleichbaren Materialien sein.

Weiterhin kann vorgesehen sein, dass die bewegte Materialbahn beispielsweise in einer Transportrichtung bewegt wird, insbesondere linear in einer Transportrichtung bewegt wird. Weiterhin kann vorgesehen sein, dass die bewegte Materialbahn mit einer Transportgeschwindigkeit bewegt wird. Diese Transportgeschwindigkeit kann beispielsweise eine konstante Transportgeschwindigkeit oder auch eine variable Transportgeschwindigkeit sein. Dazu kann vorgesehen sein, dass beispielsweise mindestens ein Geschwindigkeitsmesser zur Messung der Geschwindigkeit der Materialbahn vorgesehen ist. Weiterhin kann die Geschwindigkeit der Materialbahn auch unter Verwendung weiterer Parameter, wie beispielsweise einer Rotationsgeschwindigkeit einer Abwickel- Rolle oder Aufwickel-Rolle für die Materialbahn, unter Umständen gemeinsam mit einem entsprechenden Radius der Abwickeln- und/oder Aufwickel Rolle ermittelt werden. Weiterhin können auch andere Messgrößen verwendet werden, mit deren Hilfe sich eine Geschwindigkeit der bewegten Materialbahn, entweder auf eine der vorstehend genannten Arten oder auch eine weitere Art, ermitteln lassen, oder mit deren Hilfe die Geschwindigkeit der bewegten Materialbahn ermittelt wird.

Ganz allgemein können Messdaten im Rahmen der vorliegenden Beschreibung - also zum Beispiel die ersten und/oder zweiten Messdaten - beispielsweise alle Arten von nulldimensionalen, eindimensionalen, und/oder mehrdimensionalen Datenstrukturen sein, welche sich für einen Ähnlichkeitsvergleich und/oder eine Wiedererkennung dieser Datenstrukturen eignen.

In einer bevorzugten Ausgestaltung können die Messdaten als zweidimensionale Bild-Daten ausgebildet und eingerichtet sein. Dabei können die Bilddaten beispielsweise von einer optischen Erfassungseinrichtung, zum Beispiel einer Kamera, erfasst werden oder erfasst worden sein. Dabei kann die optische Erfassungseinrichtung zum Erfassen von Messdaten in unterschiedlichen Spektralbereichen, z.B. vom ferninfraroten bis zum ultravioletten Spektralbereich, oder auch in Teilbereichen davon, ausgebildet und eingerichtet sein.

Weiterhin können entsprechende ein- oder mehrdimensionale Bild-Daten auch von einer Thermalkamera erfasste Temperaturdaten enthalten, oder auch von entsprechenden Messgeräten erfasste elektrische Daten (beispielsweise Ladungen, Ströme oder elektrische Felder oder Feldstärken) oder auch magnetische Daten (magnetische Felder oder Feldstärken) enthalten oder umfassen.

Mit entsprechenden Messgeräten können beispielsweise auch ein- oder mehrdimensionale, zum Beispiel zweidimensionale, chemische Daten oder auch Oberflächen-Struktur-Daten (beispielsweise Rauigkeiten, Höhenprofile bzw. Höhen-Karten oder ähnliche Daten) als Messdaten erfasst werden.

Ein jeweiliger Oberflächenbereich der Materialbahn kann jeder begrenzte zweidimensionale Bereich der Materialbahn sein. Insbesondere kann der Oberflächenbereich ein zusammenhängender Bereich sein oder mehrere nicht zusammenhängende Teilbereiche umfassen. Weiterhin kann der Oberflächenbereich beispielsweise durch eine regelmäßige geometrische Form begrenzt sein. Er kann beispielsweise rechteckig, quadratisch, kreisförmig, Ellipsen-förmig sein oder auch ähnliche Formen aufweisen.

Die zur Identifizierung der verschiedenen Oberflächenbereiche jeweils erfassten Messdaten können beispielsweise vollständig über den entsprechenden Oberflächenbereich erfasst werden. Weiterhin können bezüglich eines bestimmten Oberflächenbereichs erfassten Messdaten beispielsweise über den Oberflächenbereich hinausgehen, sich mit dem Oberflächenbereich überschneiden oder auch nur einen Teilbereich des Oberflächenbereichs erfassen - oder auch eine Kombination dieser Möglichkeiten.

Zudem können die von der ersten Erfassungseinrichtung erfassten Messdaten eine andere Größe und/oder Form der erfassten Datenstruktur aufweisen (also z.B. eine andere Bildgröße und/oder Bildform) als die von der zweiten Erfassungseinrichtung erfassten Messdaten.

Im Rahmen der Erfassung der ersten und zweiten Messdaten, oder auch weiterer Messdaten, mit der ersten Erfassungseinrichtung, können dabei jeweils gleiche Messparameter und/oder Transportgeschwindigkeiten verwendet werden. Weiterhin können auch unterschiedliche Messparameter und/oder Transportgeschwindigkeiten verwendet werden.

In gleicher Weise können auch im Rahmen des Identifizierens des ersten und/oder zweiten Oberflächenbereichs bei der Verwendung der zweiten Erfassungseinrichtung jeweils gleiche Messparameter und/oder Transportgeschwindigkeiten verwendet werden oder auch verschiedene Erfassungsparameter und/oder Transportgeschwindigkeiten.

Weiterhin können auch beim Identifizieren des ersten und/oder zweiten Oberflächenbereichs gemäß den Verfahrensschritten d. und/oder e. die gleichen Messparameter und/oder Transportgeschwindigkeiten verwendet werden, wie beim Erfassen der ersten und/oder zweiten Messdaten mit der ersten Erfassungseinrichtung.

Weiterhin kann das Verfahren derart ausgebildet und eingerichtet sein, dass im Rahmen des Erfassens der ersten Messdaten auch der erste Zeitpunkt erfasst wird. Auch im Rahmen des Erfassens der zweiten Messdaten kann unmittelbar der zweite Zeitpunkt miterfasst werden. Weiterhin kann vorgesehen sein, dass im Rahmen des Identifizierens des ersten Oberflächenbereichs gemäß Verfahrensschritt d. von der zweiten Erfassungseinrichtung verschiedene dritte Messdaten erfasst werden, die z.B. jeweils verschiedenen dritten Oberflächenbereichen der bearbeiteten Materialbahn zugeordnet sein können. Weiterhin kann auch im Rahmen der Erfassung dieser verschiedenen dritten Messdaten jeweils ein dritter Zeitpunkt der Erfassung der jeweiligen dritten Messdaten mitregistriert und/oder gespeichert werden. Im Rahmen des Verfahrensschritts e. können von der zweiten Erfassungseinrichtung weiterhin auch verschiedene vierte Messdaten erfasst werden, die wiederum verschiedenen vierten Oberflächenbereichen der bearbeiteten Materialbahn zugeordnet sein können. Auch hier kann im Rahmen der Erfassung der verschiedenen vierten Messdaten jeweils ein vierter Erfassungszeitpunkt registriert und/oder gespeichert werden. Dabei können die verschiedenen dritten und/oder vierten Messdaten sowie die zweite Erfassungseinrichtung jeweils entsprechend als Messdaten bzw. Erfassungseinrichtungen gemäß der vorliegenden Beschreibung ausgebildet und eingerichtet sein.

Weiterhin können im Rahmen der Erfassung von Messdaten gemäß der vorliegenden Beschreibung jeweils noch weitere Erfassungsparameter erfasst und/oder gespeichert werden. Solche weiteren Erfassungsparameter können beispielsweise ein Erfassungszeitpunkt, ein Erfassungsdatum, Einstellparameter der Erfassungseinrichtung, eine Beleuchtungseinstellung, eine Temperatur bei der Erfassung, ein Erfassungs-Winkel, ein Erfassungs-Abstand und/oder vergleichbare Erfassungsparameter sein.

Dabei kann weiterhin vorgesehen sein, dass beim Identifizieren des ersten Oberflächenbereichs gemäß Verfahrensschritt d., neben der Verwendung der ersten Messdaten und/oder zweiten Messdaten, im Rahmen der Erfassung der ersten und/oder zweiten Messdaten erfasste weitere Messparameter verwendet werden. Derartige weitere Messparameter können beispielsweise gemäß der vorliegenden Beschreibung ausgebildet und eingerichtet sein. Im Rahmen des Identifizierens des zweiten Oberflächenbereichs gemäß Verfahrensschritt e. können beispielsweise neben den ersten und/oder zweiten Messdaten sowie des ersten und zweiten Zeitpunkts ebenfalls weitere Messparameter verwendet werden. Diese können ebenfalls gemäß der vorliegenden Beschreibung ausgebildet und eingerichtet sein.

So kann beispielsweise die Erfassung der ersten Messdaten mit einer ersten Erfassungseinrichtung und ersten Erfassungsparametern erfolgen, wobei die ersten Erfassungsparameter beispielsweise eine Transportgeschwindigkeit der Materialbahn (z.B. zum Zeitpunkt der Erfassung der ersten Messdaten), der erste Zeitpunkt der Erfassung der ersten Messdaten, Typ und/oder Modell der ersten Erfassungseinrichtung, Zusatzinformationen zu den erfassten Messdaten (z.B. Bildgröße, Daten-Typ, physikalische Einheit der erfassten Messdaten, ...), Einstellparameter der ersten Erfassungseinrichtung, Setup-Parameter der Erfassungseinrichtung (z.B. Abstände und Winkel zwischen Erfassungseinrichtung und Transportbahn), Beleuchtungsparameter und/oder ähnliche Erfassungsparameter umfassen können.

Auf die gleiche Weise können bei der Erfassung der zweiten Messdaten mit der ersten Erfassungseinrichtung sowie dem Identifizieren des ersten und/oder zweiten Oberflächenbereichs unter Verwendung der zweiten Erfassungseinrichtung jeweils entsprechende Erfassungsparameter erfasst und/oder gespeichert werden.

Entsprechende Erfassungsparameter können beispielsweise allgemein bei der Erfassung aller Messdaten gemäß der vorliegenden Beschreibung erfasst und/oder gespeichert werden.

Wie vorstehend bereits erläutert, können zum Erfassen der verschiedenen im Verfahren genannten Messdaten jeweils eine oder mehrere Erfassungseinrichtungen vorgesehen sein, die beispielsweise als entsprechend ausgebildet und eingerichteten Kameras oder sonstigen Sensoren zur Erfassung von entsprechenden Messdaten ausgebildet und eingerichtet sind. Dabei kann die Erfassung der ein oder mehrdimensionalen Datenstrukturen beispielsweise in einem einzigen Mess-Schritt, wie beispielsweise bei einer 2-D Kamera, erfolgen oder durch entsprechendes Abrastern, z.B. mit einem Punkt-Sensor oder 1D-Sensor. Auf diese Weise kann beispielsweise eine 2D-Datenstruktur, wie beispielsweise ein optisches Bild, erzeugt werden, indem eine senkrecht zu einer Bewegungsrichtung der Materialbahn ausgerichtete 1-dimensionale Kamera (z.B. eine sogenannte Zeilenkamera) verwendet wird und beispielsweise während einer Bewegung der Materialbahn unter der Zeilenkamera hindurch ein Bild erfasst wird.

Die Erfassungseinrichtungen können z.B. als eine Kamera ausgebildet und eingerichtet sein, z.B. eine 3D-, 2D, oder Zeilenkamera, eine RGB- oder Grauwert-Kamera, eine Infrarot- oder Ultraviolett-Kamera und/oder eine Hyperspektralkamera. Weiterhin kann die Erfassungseinrichtung als Höhen- oder Oberflächen-Erfassungseinrichtung ausgebildet und eingerichtet sein. Eine solche Kamera kann beispielsweise ausgestaltet sein als eine hyperspektrale Zeilenkamera, eine RGB-Kamera oder ein optischer-Liniensensor. Weiterhin kann eine Erfassungseinrichtung gemäß der vorliegenden Beschreibung z.B. ein optischer Sensor, ein Magnet-Sensor, ein Bewegungssensor, ein Ortssensor, ein Material-Sensor, ein Berührungssensor, und/oder jegliche Art von sonstigem Sensor ausgebildet und eingerichtet sein.

Messdaten gemäß der vorliegenden Beschreibung können alle von einer Erfassungseinrichtung gemäß der vorliegenden Beschreibung ausgegebene und/oder an ein externes Gerät, wie z.B. eine Steuereinrichtung, ein Edge-Device, ein Industrie-PC (IPC) und/oder eine sonstige Computer-Einrichtung übermittelte oder übermittelbare Daten bzw. Datenstrukturen sein (z.B. Datenbanken, Datensammlungen, 1D-Datenstrukturen bzw. 1D-Daten, 2D-Datenstrukturen bzw. 2D-Daten, 3D-Datenstrukturen bzw. 3D-Daten, oder auch höherdimensionale Daten oder Datenstrukturen). Solche Messdaten können beispielsweise sein: optische Daten (z.B. 0D-Daten, 1D-Daten, 2D-Daten (z.B. ein 2D-Bild), 3D-Daten (z.B. ein 3D Bild)), elektrische Eigenschaften oder Informationen (z.B. Widerstand, Leitfähigkeit, ...), magnetische Eigenschaften oder Informationen, Volumen-Messgrößen, Flächen-Messgrößen, Zustandsdaten (z.B. Druck, Temperatur, ...), Bewegungsparameter (z.B. Ort, Geschwindigkeit, Durchfluss-Menge oder -Geschwindigkeit, ...) oder sonstige Messdaten.

Die Erfassung der Zeitpunkte kann beispielsweise durch die Erfassungseinrichtung oder eine weitere Zeitmesseinrichtung, beispielsweise eine entsprechende Uhr, erfolgen, die entsprechend mit der Erfassungseinrichtung synchronisiert ist. Die genannten Zeitpunkte können beispielsweise als Uhrzeiten oder auch sonstige Zeitsignale, wie beispielsweise Zähler oder vergleichbare Daten erfasst werden und/oder gespeichert sein bzw. erfassbar und/oder speicherbar sein.

Die zweite Erfassungseinrichtung kann beispielsweise der ersten Erfassungseinrichtung entsprechen oder auch die erste Erfassungseinrichtung selbst sein. Weiterhin kann die zweite Erfassungseinrichtung beispielsweise dasselbe Messprinzip wie die erste Erfassungseinrichtung haben. Weiterhin kann die zweite Erfassungseinrichtung beispielsweise baugleich, ähnlich oder vergleichbar der ersten Erfassungseinrichtung ausgebildet und eingerichtet sein oder auch davon abweichend sein. Dabei kann die zweite Messeinrichtung derart ausgebildet und eingerichtet sein, dass die durch sie erfassten Messdaten mit den von der ersten Erfassungseinrichtung erfassten Messdaten derart vergleichbar sind, dass ein Identifizieren des ersten Oberflächenbereichs gemäß Verfahrensschritt d. und ein Identifizieren des zweiten Oberflächenbereichs gemäß Verfahrensschritt e. möglich ist. Dazu kann es weiterhin gegebenenfalls erforderlich sein, dass nach der Erfassung der ersten und/oder zweiten Messdaten entsprechende Anpassungen, Normierungen, Umrechnungen oder ähnliche Bearbeitungsschritte bei diesen Daten vorgenommen werden, bevor eine der o.g. Identifizierungen von Oberflächenbereichen vorgenommen wird oder werden kann.

Im Rahmen der Erfassung von Messdaten mit der zweiten Erfassungseinrichtung können beispielsweise die gleichen Messparameter wie bei der Erfassung von Messdaten mit der ersten Erfassungseinrichtung verwendet werden oder auch andere, angepasste oder vergleichbare Messparameter.

Prozessschritte können jegliche Art von Verfahrens- oder Bearbeitungsschritten sein, mit welchen sich Materialbahnen bearbeiten lassen. Dies kann beispielsweise ein Aufbringen von Materialien auf eine Materialbahn, ein Erhitzen, ein Abkühlen, ein Trocknen, ein Pressen/Kalandrieren, ein Aufwickeln, ein Abwickeln und/oder ein Bedrucken einer Materialbahn und/oder vergleichbare Prozessschritte sein. Ein Prozessschritt gemäß der vorliegenden Beschreibung kann auch mehrere der o.g. Prozessschritte als Prozess-Teilschritte umfassen.

Beispielsweise werden solche Materialbahnen bei der Herstellung von Batterien und Akkus verwendet, um z.B. Elektroden für diese herzustellen. Dabei wird beispielsweise auf einer Trägerfolie ein Elektrodenmaterial aufgebracht, dieses wird getrocknet und dann gepresst ("kalandriert"). Danach kann dann dieses Elektrodenband für darauffolgende Produktionsschritte in einzelne Materialsegmente aufgetrennt werden.

Da in späteren Prozessschritten unter Verwendung solcher Elektrodenbahnen Batterien und/oder Akkus hergestellt werden, bzw. werden sollen, ist es für eine Nachverfolgung des Herstellungsprozesses der einzelnen Batterien bzw. Akkus hilfreich oder sogar notwendig, die zur Herstellung verwendete Elektrodenbahn ortsaufgelöst durch die verschiedenen Prozessschritte zu verfolgen. Ziel ist es, z.B. bei fehlerhaften Batterien und/oder Akkus später nachvollziehen zu können, welche Ursache der zugrunde liegende Fehler hatte. Und dafür ist es vorteilhaft, diejenigen Bereiche der Elektrodenbahn zu kennen und über die Produktionsschritte hinweg zu verfolgen, die in der jeweiligen Batterie bzw. dem Akku verwendet wurden. Auf diese Weise kann dann beispielsweise eine Fehlerursache ermittelt werden, was die Möglichkeit ergibt, eventuell den Herstellungsprozess entsprechend zu verbessern. Weiterhin können mit der o.g. Information auch weitere Batterien bzw. Akkus ermittelt werden, die aufgrund der Nachverfolgungs-Daten ebenfalls fehlerhaft sind oder sein könnten.

Unter dem Begriff "ortsaufgelöst" wird im Zusammenhang mit der vorliegenden Beschreibung verstanden, dass Informationen zumindest teilweise und zumindest in einer räumlichen Dimension mit einer Ortsinformation oder Lageinformation korreliert oder versehen sind bzw. einer Ortsinformation oder Lageinformation zugeordnet oder zuordenbar sind. Im vorliegenden Fall kann eine Ortsauflösung z.B. derart ausgebildet und eingerichtet sein, dass Messdaten zumindest teilweise mit Lage- oder Ortsinformationen in einer Längsrichtung und/oder Transportrichtung der Materialbahn versehen oder korreliert sind oder den Messdaten derartigen Lage- oder Ortsinformationen zugeordnet oder zuordenbar sind.

Ein weiteres Beispiel für das Bearbeiten von Materialbahnen ist beispielsweise das Drucken von Zeitungen und Zeitschriften, bei welchen Farben in verschiedenen Prozessschritten auf eine Papierbahn aufgebracht werden, wobei zusätzlich weitere Beschichtungen aufgetragen werden können. Bei der Herstellung von Dachbahnen werden beispielsweise verschiedene Abdichtung Materialien auf eine Papier- oder Gewebebahn aufgebracht und mit verschiedenen weiteren Beschichtungsmaterialien verstärkt und versehen.

Auch in diesen Fällen kann eine ortsaufgelöste Nachverfolgung der entsprechenden Materialbahnen später, oder auch schon während des Produktionsprozesses, hilfreich bei einer Qualitätsüberwachung oder Fehlerursachen-Ermittlung sein und solche Maßnahmen maßgeblich verbessern.

Das Identifizieren des ersten Oberflächenbereichs gemäß Verfahrensschritt d. unter Verwendung der ersten und/oder zweiten Messdaten sowie das Identifizieren des zweiten Oberflächenbereichs gemäß Verfahrensschritt e. unter Verwendung der ersten und/oder zweiten Messdaten kann dabei beispielsweise derart erfolgen, dass Ähnlichkeiten der ersten und/oder zweiten Messdaten zu jeweils von der zweiten Erfassungseinrichtung erfassten Daten erkannt werden.

Hierzu gibt es eine Vielzahl von technisch erprobten Ähnlichkeitsverfahren, um Ähnlichkeiten beispielsweise von 2-D-Datenstrukturen wie Bilder oder ähnlichem zu erkennen. Beispiele solcher Ähnlichkeitsverfahren sind z.B. sogenannte Fingerprint-Verfahren wie z.B. das sogenannte "templatematching" oder auch das "key-point-matching". Eine Übersicht einiger solcher Verfahren findet sich z.B. im vorstehend bereits genannten Artikel "Integration of Traceability Systems in Battery Production" (Günther Riexinger et al., Procedia CIRP, Band 93, 2020, Seiten 125-130, ISSN 2212-8271, https://doi.org/10.1016/j.procir.2020.04.002. (https://www.sciencedirect.com/science/article/pii/S221282712 030531X)).

So kann beispielsweise das Identifizieren des ersten Oberflächenbereichs auf der bearbeiteten Materialbahn gemäß Verfahrensschritt d. derart ausgebildet und eingerichtet sein, dass unter Verwendung der zweiten Erfassungseinrichtung zu verschiedenen dritten Zeitpunkten jeweils verschiedene dritte Messdaten bezüglich verschiedener dritter Oberflächenbereiche der bearbeiteten Materialbahn erfasst werden und jeder dieser dritten Messdaten mit den ersten Messdaten verglichen wird. Dieser Vergleich kann beispielsweise vermittels eines Ähnlichkeitsverfahrens, wie es vorstehend erläutert wurde, erfolgen.

Verfahrensschritt d. kann dabei derart ausgebildet und eingerichtet sein, dass derjenige der dritten Oberflächenbereiche, für welchen die erfassten dritten Messdaten die höchste Ähnlichkeit mit den ersten Messdaten haben, als der erste Oberflächenbereich auf der bearbeiteten Materialbahn identifiziert und/oder wiedererkannt wird.

Verfahrensschritt d. kann weiterhin derart ausgebildet und eingerichtet sein, dass zum Identifizieren des ersten Oberflächenbereichs die Messdaten jedes der erfassten dritten Oberflächenbereiche sowohl mit den ersten Messdaten als auch mit den zweiten Messdaten verglichen werden. Diese Ausgestaltung hat den Vorteil, dass in dem Fall, in welchem der erste Oberflächenbereich durch die Bearbeitung der Materialbahn durch den Prozessschritt derart unkenntlich gemacht ist, dass er vermittels eines Vergleichs der ersten Messdaten mit den vorstehend erfassten verschiedenen dritten Messdaten zu den verschiedenen dritten Oberflächenbereichen nicht mehr durch das vorgegebene Ähnlichkeit- oder sonstige Vergleichsverfahren erkennbar ist, die Nachverfolgung der Orte dann unmittelbar mit dem zweiten Oberflächenbereich fortgesetzt werden kann. Durch diese Ausgestaltung des Verfahrens kann dies dann bemerkt werden, indem beim Vergleich der verschiedenen dritten Messdaten auch mit den zweiten Messdaten dann eine Ähnlichkeit zu den zweiten Messdaten erkannt wird. Daraus kann dann gefolgert werden, dass die ersten Messdaten möglicherweise nicht erkannt werden konnten oder nicht erkannt wurden. Nachfolgend kann dann beispielsweise eine erneute Aufnahme von dritten Messdaten zu dritten Oberflächenbereichen erfolgen, dass Vergleichsverfahren oder Ähnlichkeitsverfahren geändert werden oder weitere Korrekturschritte vorgenommen werden, um beispielsweise die ersten Messdaten, und damit den ersten Oberflächenbereich, auf der bearbeiteten Materialbahn wiederzuerkennen.

Das Identifizieren des zweiten Oberflächenbereichs auf der bearbeiteten Materialbahn gemäß Verfahrensschritt e. kann dann weiterhin derart erfolgen, dass vierte Messdaten zu jeweils verschiedenen vierten Oberflächenbereichen der bearbeiteten Materialbahn von der zweiten Erfassungseinrichtung erfasst werden, und diese vierten Messdaten jeweils mit den zweiten Messdaten vermittels eines Ähnlichkeitsverfahrens oder Vergleichsverfahrens untersucht werden.

Weiterhin kann beispielsweise aus dem parallel zur Erfassung der ersten und zweiten Messdaten erfassten ersten und zweiten Zeitpunkt dieser Erfassung, bei einer bekannten Transportgeschwindigkeit der Materialbahn bzw. einem Bekannten Geschwindigkeitsprofil für die Transportgeschwindigkeit der bewegten Materialbahn, im Rahmen der Erfassung der ersten und zweiten Messdaten, ein Abstand des ersten und zweiten Oberflächenbereichs ermittelt werden.

Weiterhin kann vorgesehen sein, dass beim Identifizierenden des ersten Oberflächenbereichs gemäß Verfahrensschritt d. jeweils mit der Erfassung dritter Messdaten zu jeweiligen dritten Oberflächenbereichen der bearbeiteten Materialbahn dazu jeweils noch ein dritter Erfassungszeitpunkt registriert wird. Zudem kann dann beim Identifizieren des zweiten Oberflächenbereichs im Rahmen der Erfassung vierter Messdaten jeweils zu vierten Oberflächenbereichen der bearbeiteten Materialbahn noch zu jeder Erfassung ein vierter Erfassungszeitpunkt registriert werden. Es kann nun aus dem dritten Erfassungszeitpunkt des gemäß Verfahrensschritt d. identifizierten ersten Oberflächenbereichs auf der bearbeiteten Materialbahn, unter Verwendung der jeweils erfassten vierten Zeitpunkte, jeweils ein Abstand des zugehörigen entsprechenden vierten Oberflächenbereichs zum bereits als erster Oberflächenbereich identifizierten und/oder wiedererkannten dritten Oberflächenbereich auf der bearbeiteten Materialbahn ermittelt werden.

Das Identifizieren des zweiten Oberflächenbereichs gemäß Merkmal e. kann dann derart erfolgen, dass sowohl eine Ähnlichkeitsbestimmung der erfassten vierten Messdaten zu den dem zweiten Oberflächenbereich auf der unbearbeiteten Materialbahn zugeordneten zweiten Messdaten erfolgt, als auch eine Ermittlung der Abstände der jeweiligen vierten Oberflächenbereiche zu den im Rahmen der Identifizierung des ersten Oberflächenbereichs auf der bearbeiteten Materialbahn identifizierten dritten Oberflächenbereichs erfolgt. Als zweiter Oberflächenbereich der bearbeiteten Materialbahn wird dann derjenige der vierten Oberflächenbereiche ausgewählt bzw. wiedererkannt, welcher, im Rahmen einer bestimmten Messgenauigkeit, einen Abstand zum identifizierten dritten Oberflächenbereich aufweist, welcher einem, wie vorstehend erläutert, bereits ermittelten Abstand des ersten und zweiten Oberflächenbereichs der unbearbeiteten Materialbahn , und bei welchem parallel der Vergleich der entsprechend erfassten zweiten Messdaten zu den im Rahmen des Verfahrensschritt e. erfassten vierten Messdaten eine hohe Ähnlichkeit, die höchste Ähnlichkeit, oder im Rahmen einer Messgenauigkeit die höchste Ähnlichkeit aufweist.

Dabei stellt das vorstehend genannte Verfahren, bei welchem auch Abstände zwischen Oberflächenbereichen zur Identifizierung des zweiten Oberflächenbereichs herangezogen werden, als ein Beispiel einer Verwendung des ersten und zweiten Zeitpunkts im Rahmen dieser Identifizierung dar.

Ein weiteres Beispiel einer Verwendung des ersten und zweiten Zeitpunkts im Rahmen der Identifizierung des zweiten Oberflächenbereichs wäre z.B., dass eine Transportgeschwindigkeit der Materialbahn im Rahmen eines Verfahrens gemäß der vorliegenden Beschreibung konstant ist. Dann kann eine Umrechnung in räumliche Abstände von Oberflächenbereichen entfallen und es kann beispielsweise im Rahmen des Identifizierens des zweiten Oberflächenbereichs derart vorgegangen werden, diejenigen der vierten Oberflächenbereiche bei der Identifizierung des zweiten Oberflächenbereichs bevorzugt werden, bei welchen der zeitliche Abstand eines Erfassungszeitpunkts der zugehörigen vierten Messdaten zu einem Erfassungszeitpunkt der dritten Messdaten einer Zeitdifferenz eines Erfassungszeitpunkts der zweiten Messdaten und der ersten Messdaten entspricht, nahe kommt oder am nächsten kommt.

Bei einer konstanten Transportgeschwindigkeit der Materialbahn während der Erfassung der ersten und zweiten Messdaten und einer weiteren konstanten Transportgeschwindigkeit der Materialbahn während der Erfassung der vorstehend genannten dritten und vierten Messdaten lässt sich das Verfahren beispielsweise derart ausgestalten, dass anhand der bekannten ersten und zweiten Zeitpunkte und der bekannten genannten Transportgeschwindigkeiten entsprechend eine Differenz des dritten und vierten Zeitpunkts berechnet wird. Nach Identifizieren des ersten Oberflächenbereichs auf der bearbeiteten Materialbahn gemäß Merkmal d. lässt sich dann anhand dieser Zeitdifferenz direkt ein Zielwert für den vierten Zeitpunkt ermitteln, bei welchem im Rahmen des Identifizierens des zweiten Oberflächenbereichs der bearbeiteten Materialbahn gemäß Merkmal e. ein Erfassen von vierten Messdaten zu einem entsprechenden vierten Oberflächenbereichs erwartet wird.

In einer vorteilhaften Ausgestaltung kann vorgesehen sein, dass beim Identifizieren des zweiten Oberflächenbereichs e. die jeweils erfassten vierten Messdaten zu den entsprechenden vierten Oberflächenbereichen nur mit den zweiten Messdaten und nicht mit den ersten Messdaten verglichen werden. Diese Ausgestaltung kann dann zum Tragen kommen bzw. verwendet werden, wenn im Rahmen des Verfahrensschritt d. der erste Oberflächenbereich auf der Materialbahn bereits identifiziert wurde. Dann ist dieser erste Oberflächenbereich bzw. dessen Ort auf der bewegten und/oder bewegbaren Materialbahn bereits bekannt und die ersten Messdaten müssen bei dem Verfahren zur Identifizierung des zweiten bzw. weiterer Oberflächenbereiche nicht mehr herangezogen werden. Auf diese Weise ergibt sich ein vereinfachtes, verbessertes und/oder beschleunigtes Verfahren zum Identifizieren des zweiten Oberflächenbereichs, da das Identifikationsverfahren durch eine reduzierte Anzahl von Vergleichen mit Messdaten beschleunigt wird.

In alternativen Ausgestaltungen kann weiterhin zum Identifizieren des ersten und/oder zweiten Oberflächenbereichs gemäß Merkmal d. und/oder Merkmal e. auch beispielsweise eine spezielle Markierung auf der Materialbahn, wie beispielsweise ein aufgedrucktes Zeichen und/oder Muster, eine Markierung am Rand, eine ID-Information (z.B. ein QR-Code oder ein Bar-Code) oder vergleichbare Identifikationsmerkmale herangezogen werden. Zum Identifizieren des ersten Oberflächenbereichs und/oder zweiten Oberflächenbereichs gemäß den Merkmalen d. und/oder e. können dann zu diesen speziellen Markierungen passende Vergleichsverfahren herangezogen werden.

Im Rahmen der vorliegenden Beschreibung wird unter einem Oberflächenbereich ganz allgemein ein bestimmter Bereich der Oberfläche der bewegbaren oder bewegten Materialbahn verstanden. Dabei ist jeder der Oberflächenbereiche einem physikalisch fixierten Ort auf der bewegten Materialbahn zugeordnet und/oder zuordenbar. Dabei wird die Bezeichnung als erster, zweiter, dritter und/oder vierter Oberflächenbereich gemäß der vorliegenden Beschreibung jeweils mit zugehörigen erfassten ersten, zweiten, dritten und/oder vierten Messdaten korreliert. Wie vorstehend bereits erläutert, kann weiterhin beispielsweise ein dritter oder vierter Oberflächenbereich auf der bearbeiteten Materialbahn ganz oder auch teilweise einem ersten oder zweiten Oberflächenbereich auf der unbearbeiteten Materialbahn entsprechen, Teil eines solchen Oberflächenbereichs sein, sich mit diesem überschneiden oder auch über diesen hinausgehen - oder auch eine Kombination der genannten Fälle.

Auf diese Weise lässt sich beispielsweise durch Wiedererkennen des ersten Oberflächenbereichs der unbearbeiteten Materialbahnen auf der bearbeiteten Materialbahn gemäß dem Verfahrensschritt d. ein durch den ersten Oberflächenbereich definierter Ort auf der Materialbahn wiedererkennen und so beispielsweise im Rahmen einer Bearbeitung der Materialbahn durch den Prozessschritt nachverfolgen.

In entsprechender Weise lässt sich das vorsehend erläuterte Verfahren auch auf die Nachverfolgung von mehr als zwei Oberflächenbereichen erweitern. Dabei ermöglicht das vorliegend genannte Verfahren dann bei einer Erweiterung auf die Erfassung von Messdaten zu mehr als zwei Oberflächenbereichen der unbearbeiteten Materialbahnen, und dann der nachfolgenden Wiedererkennung dieser Oberflächenbereiche auf der bearbeiteten Materialbahn gemäß dem im Rahmen der vorliegenden Beschreibung erläuterten Verfahren, dann eine Wiedererkennung und Nachverfolgung verschiedener genau definierter Orte auf der bewegten oder bewegbaren Materialbahn durch den Prozessschritt.

In einer Erweiterung des beschriebenen Verfahrens kann ein solches Verfahren dann auch beispielsweise auf mehrere Prozessschritte, auch über mehrere Prozessschritte hinweg, erweitert werden. Dabei kann vorgesehen sein, dass nach jedem der Prozessschritte die vor dem Prozessschritt bekannten Oberflächenbereich unter Verwendung eines Verfahrens gemäß der vorliegenden Beschreibung wiedererkannt bzw. identifiziert werden. Es kann auch vorgesehen, dass nur nach einer Auswahl der Prozessschritte vorbekannte Oberflächenbereiche unter Verwendung eines Verfahrens gemäß der vorliegenden Beschreibung wiedererkannt bzw. identifiziert werden.

Auf diese Weise wird ein verbessertes und/oder vereinfachtes Verfahren zur Verfügung gestellt, ein Tracking oder Tracing bzw. einer Nachverfolgung der Wirkung eines oder verschiedener Prozessschritte oder Verarbeitungsschritte auf eine bewegte und/oder bewegbare bzw. eine ausgedehnte Materialbahn ortsspezifisch durchzuführen.

In einer Erweiterung des Verfahrens kann auch vorgesehen sein, dass weitere zweite Oberflächenbereiche auf der Materialbahn vorgesehen sind und gemäß Verfahrensschritt b. zu jedem der weiteren zweiten Oberflächenbereiche jeweils weitere zweite Messdaten erfasst werden, sowie im Rahmen der Erfassung der jeweiligen zweiten Messdaten jeweils zweite Erfassungszeitpunkte.

Das Identifizieren des zweiten Oberflächenbereichs auf der bearbeiteten Materialbahn gemäß Merkmal d. kann in diesem Fall durch das Identifizieren der weiteren zweiten Oberflächenbereiche auf der bearbeiteten Materialbahn erweitert werden. Dabei kann dieses Identifizieren der weiteren zweiten Oberflächenbereiche unter Verwendung der zweiten Erfassungseinrichtung, der ersten Messdaten, der zweiten Messdaten und/oder der weiteren zweiten Messdaten, sowie des ersten, zweiten und der weiteren zweiten Zeitpunkte erfolgen.

Auf diese Weise kann ein Tracking oder Tracing bzw. ein Nachverfolgen einer ausgedehnten Materialbahn im Rahmen der Prozessierung mit dem Prozessschritt mit vergleichsweise hoher Ortsauflösung erfolgen.

In einer vorteilhaften Ausgestaltung der vorstehend erläuterten Alternative kann weiterhin vorgesehen sein, dass im Rahmen des Identifizierens des zweiten Oberflächenbereichs, bzw. der weiteren zweiten Oberflächenbereiche gemäß Merkmal e., nur noch die Messdaten herangezogen werden, zu welchen noch kein erster, zweiter und/oder weiterer zweiter Oberflächenbereich identifiziert wurde. Auf diese Weise lässt sich der Rechenaufwand im Rahmen des Identifizierens gemäß Merkmal e. reduzieren und so das Verfahren weiter beschleunigen.

In einer weiteren Alternative lässt sich das vorstehend genannte Verfahren auch auf ein Nachverfolgen von Oberflächenbereichen über mehrere Prozessschritte hinweg erweitern.

In diesem Fall würde nach dem Identifizieren des zweiten Oberflächenbereichs auf der bearbeiteten Materialbahn gemäß Merkmal e. wiederum ein Bearbeiten der Materialbahn in einem weiteren Prozessschritt erfolgen, und nachfolgend wiederum das Identifizieren eines weiteren ersten Oberflächenbereichs auf der weiterhin bearbeiteten Materialbahn, vergleichbar zu Merkmal d.. Weiterhin würde dann ein Identifizieren eines weiteren zweiten Oberflächenbereichs auf der weiterhin bearbeiteten Materialbahn vergleichbar mit Verfahrensschritt e. erfolgen. Auch dieses Verfahren lässt sich auf eine beliebige Abfolge von Prozessschritten entsprechend erweitern.

In einem weiteren vorteilhaften Verfahren lassen sich die vorstehend genannten Verfahrensausgestaltungen, die Erweiterung des Verfahrens auf viele Oberflächenbereiche und die weitere Erweiterung auf viele Prozessschritte, auch kombinieren, um eine Nachverfolgung einer bewegten oder bewegbaren Materialbahn über eine komplette Prozesskette mit hoher Ortsauflösung zu erhalten.

In einer vorteilhaften Ausgestaltung kann weiterhin vorgesehen sein, dass nach erfolgreichem Identifizieren des ersten Oberflächenbereichs unter Verwendung der ersten Messdaten gemäß Verfahrensschritt d. das Identifizieren des zweiten Oberflächenbereichs gemäß Verfahrensschritt e. unter Verwendung des ersten und zweiten Zeitpunkts sowie der zweiten Messdaten erfolgt.

In einer weiteren vorteilhaften Ausgestaltung kann ganz allgemein vorgesehen sein, dass alle diejenigen Messdaten nicht mehr zur Identifizierung weiterer, bisher auf der bearbeiteten Materialbahn noch nicht wiedererkannter Oberflächenbereiche herangezogen werden, mit welchen bereits erfolgreich Oberflächenbereiche auf der bearbeiteten Materialbahn identifiziert wurden. Dies kann beispielsweise derart ausgebildet und eingerichtet sein, dass zur Identifizierung weiterer, bisher auf der bearbeiteten Materialbahn noch nicht wiedererkannter Oberflächenbereiche, nur Messdaten herangezogen werden, mit welchen noch keine Oberflächenbereiche auf der bearbeiteten Materialbahn identifiziert wurden.

Die vorstehend genannten Ausgestaltungen erhöhen die Effizienz eines Verfahrens gemäß der vorliegenden Beschreibung, da für noch zu identifizierende Oberflächenbereiche auf der bearbeiteten Materialbahn nur noch diejenigen Messdaten herangezogen werden, zu welchen bisher noch kein Oberflächenbereich auf der bearbeiteten Materialbahn identifiziert wurde. Durch die reduzierte Anzahl der beim Identifizieren von Oberflächenbereichen auf der bearbeiteten Materialbahn heranzuziehenden Messdaten, wird der Verfahrensaufwand beim Identifizieren noch nicht identifizierter Oberflächenbereiche auf der bearbeiteten Materialbahn reduziert. Dies macht das Verfahren schneller und/oder effizienter.

In einer vorteilhaften Ausgestaltung kann weiterhin vorgesehen sein, dass in Verfahrensschritt b. weitere zweite Messdaten zu weiteren zweiten Oberflächenbereichen der Materialbahn unter Verwendung der ersten Erfassungseinrichtung zu jeweils weiteren zweiten Zeitpunkten erfasst werden. Diese weiteren zweiten Messdaten können dann im Rahmen des Verfahrensschritts d. und/oder e. ebenfalls zum Identifizieren des ersten Oberflächenbereichs und/oder des zweiten Oberflächenbereichs herangezogen werden oder sind dazu heranziehbar.

In einer weiteren Fortentwicklung dieser Ausgestaltung kann weiterhin vorgesehen sein, dass im Rahmen des Verfahrensschritts e. zusätzlich ein Identifizieren der weiteren zweiten Oberflächenbereiche unter Verwendung der zweiten Erfassungseinrichtung, der ersten Messdaten, der zweiten Messdaten und/oder der weiteren zweiten Messdaten sowie des ersten, zweiten und der weiteren zweiten Zeitpunkte erfolgt.

In einer noch weitergehenden Fortentwicklung kann dann vorgesehen sein, dass das Identifizieren des zweiten Oberflächenbereichs und/oder der weiteren zweiten Oberflächenbereiche nur unter Verwendung der derjenigen der ersten, zweiten und/oder weiteren zweiten Messdaten erfolgt, zu welchen noch kein zugehöriger Oberflächenbereich auf der bearbeiteten Materialbahn identifiziert wurde.

Weiterhin kann ein Verfahren gemäß der vorliegenden Beschreibung derart ausgebildet und eingerichtet sein, dass das Identifizieren des zweiten Oberflächenbereichs gemäß Verfahrensschritt e. weiterhin unter Verwendung einer Messunsicherheit bei der Ermittlung des ersten und/oder zweiten Zeitpunkts erfolgt.

Das Verfahren kann vorteilhaft derart weitergebildet werden, dass zur Identifikation des zweiten Oberflächenbereichs gemäß Verfahrensschritt e. sowohl eine Ähnlichkeit von im Verfahrensschritt e. erfassten weiteren vierten Messdaten bezüglich weiteren vierten Oberflächenbereichen der bearbeiteten Materialbahn zu den gemäß Verfahrensschritt b. erfassten zweiten Messdaten herangezogen wird, als auch eine Wahrscheinlichkeitsverteilung und/oder Erwartungsverteilung für mögliche bzw. erwartete Abstände des bereits gemäß Verfahrensschritt d. identifizierten ersten Oberflächenbereichs zum zu identifizierenden zweiten Oberflächenbereich.

Dies kann beispielsweise derart ausgebildet und eingerichtet sein, dass jeden der weiteren vierten Messdaten jeweils ein Ähnlichkeitswert zu den zweiten Messdaten zugeordnet wird. Weiterhin wird zu jedem der zugehörigen weiteren vierten Oberflächenbereiche ein räumlicher und/oder zeitlicher Abstand zum bereits gemäß Verfahrensschritt d. identifizierten ersten Oberflächenbereich zugeordnet. Dies kann z.B. unter Verwendung eines zugeordneten weiteren vierten Erfassungszeitpunkts der zugehörigen weiteren vierten Messdaten sowie einem Erfassungszeitpunkt derjenigen Messdaten geschehen, die dem gemäß Verfahrensschritt d. durch die zweite Erfassungseinrichtung erfassten und identifizierten ersten Oberflächenbereich auf der bearbeiteten Materialbahn zugeordnet sind. Dann wird aus dem jeweiligen vorstehend ermittelten räumlichen und/oder zeitlichen Abstand jeweils aus der vorstehend genannten Wahrscheinlichkeitsverteilung bzw. Erwartungsverteilung für mögliche Abstände ein Abstands-Wahrscheinlichkeitswert zugeordnet.

Nachfolgend wird dann derjenige der weiteren vierten Oberflächenbereiche als der gemäß Verfahrensschritt e. identifizierte zweite Oberflächenbereich ausgewählt, bei welchem sich eine vorteilhafte, maximale und/oder geeignete Kombination aus dem zugeordneten Ähnlichkeitswert der Messdaten sowie dem Abstands-Wahrscheinlichkeitswert bzw. Abstands-Erwartungswert ergibt. Dies kann beispielsweise derart ausgebildet und eingerichtet sein, dass derjenige Oberflächenbereich gemäß Verfahrensschritt e. als zweiter Oberflächenbereich identifiziert wird, bei welche eine Summe, eine Summe der Quadrate, eine Summe der Beträge, ein Produkt, ein Produkt der Quadrate und/oder ein Produkt der Beträge des Ähnlichkeitswerts der Messdaten sowie des Abstands-Wahrscheinlichkeitswerts bzw. Abstands-Erwartungswerts ergibt.

Die Berücksichtigung von Messunsicherheiten bei der Ermittlung des ersten und/oder zweiten Zeitpunkts verbessert das Verfahren gemäß der vorliegenden Beschreibung weiter, da eine realistischere Größe für zu erwartende zeitliche und/oder räumliche Abstände von Oberflächenbereichen im Rahmen der Identifizierung von Oberflächenbereichen der bearbeiteten Materialbahn berücksichtigt werden.

So führt beispielsweise eine bestimmte Messunsicherheit bei der Ermittlung des ersten und/oder zweiten Zeitpunkts bei einer vorgegebenen Bahngeschwindigkeit der Materialbahn zu einer bestimmten Ortsunschärfe bei der Berechnung eines räumlichen Abstands zweier Oberflächenbereiche.

Wird beispielsweise bei der Identifizierung des zweiten Oberflächenbereichs gemäß Verfahrensschritt e. eine Messunsicherheit bei der Erfassung des ersten und/oder zweiten Zeitpunkts berücksichtigt, so führt das zu einer entsprechenden Unsicherheit bei einem zu erwartenden Abstand des ersten und zweiten Oberflächenbereichs der bearbeiteten Materialbahn. Wird für einen Messzeitpunkt beispielsweise eine eine Gauss'sche oder ähnliche Wahrscheinlichkeitsverteilung angenommen, so würde die oben genannte Messunsicherheit beispielsweise einer Halbwertsbreite dieser Wahrscheinlichkeitsverteilung entsprechen. Nimmt man für den ersten Messzeitpunkt eine erste Wahrscheinlichkeitsverteilung und den zweiten Messzeitpunkt eine zweite Wahrscheinlichkeitsverteilung an, so ergibt sich dann für eine aus diesen Zeitpunkten und einer Bahngeschwindigkeit, bzw. eines Bahngeschwindigkeitsverlaufs, eine sich aus beiden Wahrscheinlichkeitsverteilungen ergebende Wahrscheinlichkeitsverteilung für einen zu erwartenden Abstand zwischen dem ersten und zweiten Oberflächenbereich auf der bearbeiteten Materialbahn.

Dies führt zu einem verbesserten Identifizieren des zweiten Oberflächenbereichs auf der bearbeiteten Materialbahn bzw. des zweiten Oberflächenbereichs und weiteren zweiten Oberflächenbereichen der bearbeiteten Materialbahn. Ein solches verbessertes Verfahren kann z.B. derart ausgebildet und eingerichtet sein, dass im Rahmen des Verfahrensschritts e. weitere vierten Messdaten bezüglich weiteren vierten Oberflächenbereichen der bearbeiteten Materialbahn erfasst werden. Dabei wird zu jedem der weiteren vierten Messdaten ein weiterer vierter Zeitpunkt der Erfassung zugeordnet. Zudem wird aus der Wahrscheinlichkeitsverteilung des ersten und zweiten Zeitpunkts zusammen mit einer entsprechenden Transportgeschwindigkeit bzw. einem entsprechenden Transportgeschwindigkeits-Profil, eine Wahrscheinlichkeitsverteilung für einen zu erwartenden Abstand des ersten und zweiten Oberflächenbereichs auf der bearbeiteten Materialbahn ermittelt. Außerdem wird im Rahmen des Identifizierens des ersten Oberflächenbereichs auf der bearbeiteten Materialbahn gemäß Verfahrensschritt d. ein dritter Zeitpunkt festgehalten, zu welchem dritte Messdaten zu einem dritten Oberflächenbereich aufgenommen wurden, der dann im Rahmen des Verfahrensschritts d. als der erste Oberflächenbereich auf der bearbeiteten Materialbahn identifiziert wurde.

Bei einem Ähnlichkeitsvergleich der weiteren vierten Messdaten mit den zweiten Messdaten im Rahmen des Verfahrensschritts e. wird dann beispielsweise bei mehreren dieser weiteren vierten Messdaten bezüglich mehrerer der weiteren vierten Oberflächenbereiche jeweils eine Ähnlichkeit mit den zweiten Messdaten festgestellt und diesen weiteren vierten Oberflächenbereichen bzw. Messdaten jeweils ein entsprechender Ähnlichkeitswert zugeordnet. Weiterhin wird jedem dieser weiteren vierten Oberflächenbereiche ein weiterer vierter Abstand vom bereits identifizierten ersten Oberflächenbereich auf der bearbeiteten Materialbahn zugeordnet, der sich aus dem vorstehend genannten dritten Zeitpunkt sowie dem den jeweiligen vierten Messdaten zugeordneten vierten Zeitpunkt der Erfassung dieser vierten Messdaten ergibt.

Eine Identifizierung des zweiten Oberflächenbereichs gemäß Verfahrensschritt e. kann dann dadurch erreicht werden, dass die gemäß der vorstehenden Erläuterung ermittelten Ähnlichkeitswerte der Messdaten mit den vorstehend ebenfalls erläuterten weiteren vierten Abständen der jeweiligen weiteren vierten Oberflächenbereichen vom bereits identifizierten ersten Oberflächenbereich und den zugehörigen Wahrscheinlichkeiten für mögliche Abstände kombiniert werden. Dann kann derjenige der weiteren vierten Oberflächenbereiche, für welchen sich bei einer Kombination des zugehörigen Ähnlichkeitswerts mit der entsprechenden Wahrscheinlichkeit des ermittelten Abstands ein Maximum ergibt, als der gemäß Verfahrensschritt e. identifizierte zweite Oberflächenbereich auf der bearbeiteten Materialbahn festgelegt werden bzw. wird als dieser zweite Oberflächenbereich festgelegt.

Weiterhin kann ein Verfahren gemäß der vorliegenden Beschreibung derart ausgebildet und eingerichtet sein, dass im Rahmen des Prozessschritts in Verfahrensschritt c. eine Längenänderung der Materialbahn zwischen dem ersten und zweiten Oberflächenbereich erfolgt, sowie dass im Rahmen des Verfahrensschritts e. die Längenänderung der Materialbahn beim Identifizieren des zweiten Oberflächenbereichs berücksichtig wird.

Dabei kann das Verfahren derart ausgebildet und eingerichtet sein, dass im Rahmen der Identifizierung des zweiten Oberflächenbereichs gemäß Verfahrensschritt e. ein möglicher bzw. erwarteter Abstand zum identifizierten ersten Oberflächenbereich gemäß der vorliegenden Beschreibung, oder eine Abstandswahrscheinlichkeitsverteilung zum identifizierten ersten Oberflächenbereich gemäß der vorliegenden Beschreibung, verwendet wird. Dieser erwartete Abstand bzw. die Abstandswahrscheinlichkeitsverteilung wird dann gemäß dieser Ausgestaltung des Verfahrens durch die genannte Längenänderung derart korrigiert, dass bei einer Vergrößerung der Länge zwischen dem ersten und zweiten Oberflächenbereich der genannte mögliche Abstand bzw. die genannte Abstandswahrscheinlichkeitsverteilung entsprechend der Längenänderung verlängert wird. Entsprechend ist das Verfahren derart ausgebildet und eingerichtet, dass bei einer Verkleinerung der Länge zwischen dem ersten und zweiten Oberflächenbereich der mögliche Abstand bzw. die Abstandswahrscheinlichkeitsverteilung entsprechend der Längenänderung verkürzt wird.

Das Berücksichtigen der Längenänderung der Materialbahn beim Identifizieren des zweiten Oberflächenbereichs gemäß Verfahrensschritt e kann auch derart ausgebildet und eingerichtet sein, dass beim Identifizieren des zweiten Oberflächenbereichs gemäß Verfahrensschritt e. kein Abstand zwischen dem ersten und zweiten Oberflächenbereich berücksichtigt wird. Das Verfahren kann weiterhin auch derart ausgebildet und eingerichtet sein, dass im Rahmen von Verfahrensschritt e. bei Vorliegen einer Längenänderung der Materialbahn zwischen dem ersten und zweiten Oberflächenbereich gemäß der vorstehend dargestellten Ausgestaltung der erste und zweite Zeitpunkt nicht berücksichtigt werden.

Diese Ausgestaltung verbessert das Verfahren, da es auch im Fall beispielsweise eines Bahnrisses, einer Bahnreparatur oder einer sonstigen Manipulation der Materialbahn, ein zuverlässiges ortsaufgelöstes Nachverfolgen von Oberflächenbereichen einer Materialbahn ermöglicht.

Dabei wird unter der Formulierung: "im Rahmen des Prozessschritts" verstanden, dass die Längenänderung nach der Erfassung der Messdaten gemäß Verfahrensschritt b. und vor der Identifizierung des ersten Oberflächenbereichs gemäß Verfahrensschritt d. erfolgt. Weiterhin kann darunter auch verstanden werden, dass die Längenänderung vor, während und/oder nach den Prozessschritt erfolgt.

Unter einer Längenänderung wird dabei beispielsweise eine Verkürzung, zum Beispiel bei einem Bahnriss und erneuten Verbinden der Bahn, z.B. unter Herausnahme eines bestimmten Bereichs, oder auch eine Verlängerung der Materialbahn durch eine lokale Dehnung der Materialbahn, oder auch das Einfügen eines Materialstücks an einer bestimmten Stelle, verstanden.

In einer weiteren vorteilhaften Ausgestaltung eines Verfahrens gemäß der vorliegenden Beschreibung kann vorgesehen sein, dass zum Identifizieren der ersten und zweiten Oberflächenbereiche gemäß der Verfahrensschritte d. und e. modifizierte erste und/oder zweite Messdaten verwendet werden, wobei die modifizierten ersten Messedaten vermittels einer Anwendung mindestens eines Prozess-ML-Modells auf die ersten Messdaten, und die modifizierten zweiten Messedaten vermittels einer Anwendung des mindestens einen Prozess-ML-Modells auf die zweiten Messdaten erzeugt werden.

Dabei wird, insbesondere auch im Rahmen der vorliegenden Beschreibung, unter der Abkürzung "ML" "maschinelles Lernen" oder auch "Machine Learning" verstanden. Maschinelle Lernverfahren, ML-Modelle, der Begriff "ML-Modell" und/oder der Begriff "Prozess-ML-Modell" wird im Rahmen der vorliegenden Beschreibung noch näher erläutert.

Ein Verfahren gemäß der vorliegenden Beschreibung kann beispielsweise derart ausgebildet und eingerichtet sein, dass die Messdaten bezüglich eines bestimmten Oberflächenbereichs z.B. charakteristisch für ein Aussehen, eine Struktur, ein Oberflächenrelief und/oder weitere Oberflächeneigenschaften, Oberflächenparameter und/oder Materialeigenschaften des Oberflächenbereichs sind. Weiterhin kann der Prozessschritt zur Bearbeitung des Oberflächenbereichs bzw. der Materialbahn derart ausgebildet und eingerichtet sein, dass dabei die Oberfläche bezüglich beispielsweise der vorstehend genannten Eigenschaften verändert wird. Diese Veränderung kann dabei derart ausgebildet und eingerichtet sein, dass beispielsweise die Eigenschaften der Oberfläche so geändert werden, dass dadurch ein Vergleich der Messdaten bezüglich des Oberflächenbereichs vor dem Prozessschritt mit denen, welche nach dem Prozessschritt erfasst werden, ein Wiedererkennen eines Oberflächenbereichs nach der Durchführung des Prozessschritts erschwert wird, werden kann, oder sogar unmöglich ist bzw. sein kann.

So können sich beispielsweise die Eigenschaften von Oberflächen durch Aufwickeln der Materialbahn verändern, indem beispielsweise Oberflächenstrukturen eines auf der aufgewickelten Rolle benachbarten Materialbahnstücks auf ein darunterliegendes Materialstück übertragen werden bzw. werden können (die Struktur kann z.B. "durchdrücken"). Auch beispielsweise bei dem Pressen einer Materialbahn mit einer Presswalze, Beschichten einer Materialbahn, oder auch beim Trocknen einer Materialbahn können Oberflächeneigenschaften und/oder - Strukturen verändert werden oder veränderbar sein.

Weiterhin können bei der Verwendung der zweiten Erfassungseinrichtung im Rahmen eines Identifizierens von Oberflächenbereichen gemäß Verfahrensschritt d. und/oder e. andere Messprinzipien, Erfassungsparameter, Einstellungen, Datenformate und/oder ein anderes Mess-Setup verwendet werden. Auch in einem solchen Fall kann ein Wiedererkennen eines Oberflächenbereichs durch solche Änderungen erschwert oder sogar unmöglich gemacht werden.

Die vorstehend genannte Ausgestaltung vermittels einer Anwendung des Prozess-ML-Modells auf die ersten Messdaten hat den Vorteil, dass bei einem bekannten Prozessschritt und/oder bekannten zweiten Erfassungseinrichtungen das Prozess-ML-Modell beispielsweise derart trainiert sein kann, dass die Auswirkungen des Prozessschritts und/oder der zweiten Erfassungseinrichtung auf bezüglich eines Oberflächenbereichs durch das zweite Erfassungsmittel erfassten Messdaten durch Anwendung des Prozess-ML-Modells auf die ursprünglich bezüglich dieses Oberflächenbereichs aufgenommenen Messdaten simuliert werden bzw. teilweise simuliert werden. Dabei können die Messdaten beispielsweise die ersten und/oder zweiten Messdaten gemäß der vorliegenden Beschreibung sein. Auf diese Weise kann eine Veränderung eines Oberflächenbereichs durch den Prozessschritt und/oder die zweiten Erfassungsmittel simuliert werden.

Beispielsweise durch Verwendung von vermittels des Prozess-ML-Modells erzeugten modifizierten Messdaten im Rahmen des Identifizierens eines Oberflächenbereichs, beispielsweise des ersten Oberflächenbereichs gemäß Merkmal d. und/oder des zweiten Oberflächenbereichs gemäß Merkmal e., kann das Wiedererkennen der genannten Oberflächenbereiche durch Vergleich mit den von der bearbeiteten Materialbahn erfassten Messdaten mit den genannten modifizierten Messdaten, verbessert, oder unter Umständen überhaupt erst ermöglicht werden.

Solch ein Prozess-ML-Modell kann beispielsweise für ein Aufwickeln einer Materialbahn bzw. ein aufeinanderfolgendes Auf- und wieder Abwickeln einer Materialbahn erzeugt werden, und beispielsweise das Übertragen von Strukturen von Materialbahn-Bereichen auf auf einer aufgewickelten Rolle benachbarte Materialbahn-Bereiche simulieren oder eine derartige Simulation umfassen. Weiterhin kann ein Prozess-ML Modell beispielsweise auch für ein Pressen oder Kalandrieren einer Materialbahn erstellt werden, und dabei beispielsweise durch entsprechendes Trainieren die Wirkung einer Oberflächenstruktur einer bestimmten Presswalze auf die Materialbahn simulieren oder eine derartige Simulation umfassen. Entsprechende Prozess-ML-Modelle können beispielsweise für alle Prozessschritte gemäß der vorliegenden Beschreibung erzeugt werden oder erzeugbar sein.

Weiterhin kann ein Prozess-ML-Modell die Verwendung einer von der ersten Erfassungseinrichtung verschiedenen zweiten Erfassungseinrichtung simulieren oder eine derartige Simulation umfassen. Auch kann ein Prozess-ML-Modell die Verwendung von im Vergleich zu einer Messdatenerfassung mit der ersten Erfassungseinrichtung geänderten Messparametern und/oder Messanordnungen simulieren oder eine derartige Simulation umfassen.

Im Rahmen der vorliegenden Beschreibung wird dabei unter einer Messanordnung beispielsweise eine räumliche Anordnung und/oder Installation einer Messeinrichtung verstanden. Solch eine räumliche Anordnung kann beispielsweise einen Abstand sowie entsprechende Betrachtungswinkel der Erfassungseinrichtung zur Materialbahn umfassen. Weiterhin kann die Messanordnung beispielsweise auch Art und Anordnung einer Beleuchtungseinrichtung umfassen, die beispielsweise im Rahmen der Erfassung der Messdaten durch die Erfassungseinrichtung verwendet wird bzw. werden kann.

Das Prozess-ML-Modell kann beispielsweise als ein ML-Modell gemäß der vorliegenden Beschreibung ausgebildet und eingerichtet sein.

Dass das Prozess-ML-Modell einen bestimmten Prozessschritt und/oder eine Messdatenerfassung mit einer bestimmten Erfassungseinrichtung unter der Verwendung bestimmter Messparameter und/oder Messanordnungen simuliert oder teileweise simuliert oder eine derartige Simulation umfasst bedeutet, dass die o.g. Simulation zumindest ein Teil der Wirkung des Prozess-ML-Modells auf in das Prozess-ML-Modell eingegebene Messdaten ist.

Das Prozess-ML-Modell kann insbesondere ein ML-Modell gemäß der vorliegenden Beschreibung sein. Dabei kann das Prozess-ML-Modell derart ausgebildet und eingerichtet sein, dass eine Anwendung des Prozess-ML-Modells auf bezüglich eines Oberflächenbereichs einer Materialbahn erfasste Messdaten eine Änderung der Messdaten durch eine Auswirkung eines bestimmten Prozessschritts auf den Oberflächenbereich und/oder eine Änderung der Messdaten durch eine Erfassung des Oberflächenbereichs mit der zweiten Erfassungseinrichtung simuliert oder zumindest teilweise simuliert bzw. derartige Simulationen umfasst. Die Simulation der Erfassung der Messdaten mit der zweiten Erfassungseinrichtung umfasst dabei verwendete Messparameter und/oder Messanordnungen. Dabei können die Messdaten, die Erfassung der Messdaten, die zweite Erfassungseinrichtung, der Oberflächenbereich, der Prozessschritt und/oder die Auswirkungen des Prozessschrittes auf die Messdaten beispielsweise gemäß der vorliegenden Beschreibung ausgebildet und eingerichtet sein.

Das Prozess-ML-Modell kann insbesondere ein ML-Modell gemäß der vorliegenden Beschreibung sein, welches derart ausgebildet und eingerichtet ist, dass eine Anwendung des Prozess-ML-Modells auf die ersten, zweiten und gegebenenfalls weitere Messdaten eine Änderung der ersten, zweiten und gegebenenfalls weiteren Messdaten durch eine Auswirkung des Prozessschritts auf den ersten, zweiten und gegebenfalls weitere zugehörige Oberflächenbereiche simuliert oder zumindest teilweise simuliert oder eine derartige Simulation umfasst.

In einer vorteilhaften Ausgestaltung der Erfindung kann das Prozess-ML-Modell beispielsweise als ein neuronales Netz, insbesondere als ein tiefes neuronales Netz ("deep neural network", DNN), ausgebildet und eingerichtet sein.

Dabei wird unter einem maschinellen Lernverfahren beispielsweise ein automatisiertes ("maschinelles") Verfahren verstanden, welches Ergebnisse nicht durch im Vorhinein festgelegte Regeln generiert, sondern bei welchem vermittels eines maschinellen Lernalgorithmus oder Lernverfahrens aus vielen Beispielen (automatisch) Regelmäßigkeiten identifiziert werden auf deren Basis dann Aussagen über zu analysierende Daten erzeugt werden.

Solche maschinellen Lernverfahren können beispielsweise als ein überwachtes Lernverfahren, ein teilüberwachtes Lernverfahren, ein unüberwachtes Lernverfahren oder auch ein bestärkendes Lernverfahren ("Reinforcement Learning") ausgebildet und eingerichtet sein.

Beispiele für maschinelle Lernverfahren sind z.B. Regressions-Algorithmen (z.B. lineare Regressionsalgorithmen), eine Erzeugung oder Optimierung von Entscheidungsbäumen (sogenannte "Decision Trees"), Lernverfahren für neuronale Netze, Clustering-Verfahren (z.B. ein sogenanntes "k-means-Clustering"), Lernverfahren für oder Erzeugung von Stützvektormaschinen ("Support Vector Machines" (SVM)), Lernverfahren für oder Erzeugung von sequentiellen Entscheidungsmodellen oder Lernverfahren für oder Erzeugung von Bayessche Modellen oder Netzen.

So ist ein Beispiel für ein maschinelles Lernverfahren die "Lineare Regression". Die lineare Regression ist eine Parametrische Methode, bei der die Labels durch die Gewichtung aller Features angenähert werden. Bei einer Standardvariante des linearen Modells wird bei der Optimierung der mittlere quadratische Fehler (engl. Mean Squared Error, MSE) minimiert. Es gibt andere Varianten des linearen Modells, die sich nach der Form der Fehlerfunktion unterscheiden. Eine Variante ist z.B. der Huber-Schätzer, bei dem z.B. ein Parameter *ε* eingeführt wird, um Ausreißer in den Inputs zu beseitigen.

Ein weiteres Beispiel für ein maschinelles Lernverfahren ist das k-Nächste-Nachbarn-Verfahren. Das Prinzip des k-Nächste-Nachbar (k-NN) Modells ist, für jeden Input die k nächsten Inputs zu ermitteln. Es ist eine nicht-parametrische Methode, bei der das Ähnlichkeitskriterium eine definierte Metrik ist. Diese Metrik kann eine Norm oder eine Distanz sein, die für alle Inputs bestimmbar ist. Aus der Nachbarschaft bzw. Ähnlichkeit der Inputs wird die Nachbarschaft der Labels hergeleitet.

Entscheidungsbäume sind ein weiteres Beispiel für ein ML-Modell, dem ein maschinelles Lernverfahren zugrunde liegt. Ein Entscheidungsbaum (engl. Decision Tree, DT) ist eine hierarchische Struktur, mit der eine nicht-parametrische Schätzung implementiert werden kann. Bei der Datenverarbeitung mit Entscheidungsbäumen werden die Inputs in lokalen Regionen aufgeteilt, deren Distanz zueinander durch eine bestimmte Metrik definiert wird. Diese lokalen Regionen sind die Entscheidungsbäume.

Ein Entscheidungsbaum ist eine Sequenz von rekursiven Aufteilungen, die aus Entscheidungsknoten und Endknoten bzw. Blättern besteht. Bei jedem Entscheidungsknoten wird über eine definierte Funktion, die sogenannte Diskriminanzfunktion, eine diskrete Entscheidung getroffen, deren Ergebnis (ja oder nein) zu den folgenden Knoten führt. Wird ein Blattknoten erreicht, dann endet der Prozess und ein Ausgabewert wird geliefert.

Das Ergebnis einer solchen Anwendung eines solchen maschinellen Lernalgorithmus oder Lernverfahrens auf bestimmte Daten wird, insbesondere in der vorliegenden Beschreibung, als "Machine-Learning"-Modell oder ML-Modell bezeichnet. Ein solche ML-Modell stellt dabei das digital gespeicherte oder speicherbare Ergebnis der Anwendung des maschinellen Lernalgorithmus oder Lernverfahrens auf die analysierten Daten dar.

Dabei kann die Erzeugung des ML-Modells derart ausgebildet und eingerichtet sein, dass das das ML-Modell durch die Anwendung des maschinellen Lernverfahrens neu gebildet wird oder ein bereits bestehendes ML-Modell durch die Anwendung des maschinellen Lernverfahrens verändert oder angepasst wird.

Beispiele für solche ML-Modelle sind Ergebnisse von Regressions-Alogrithmen (z.B. eines linearen Regressions-Algorithmus), Neuronale Netze ("Neural Networks"), Entscheidungsbäume ("Decision Tree"), die Ergebnisse von Clustering-Verfahren (inklusive z.B. die erhaltenen Cluster oder Cluster-Kategorien, -Definitionen und/oder -Parameter), Stützvektormaschinen ("Support Vector Machines" (SVM)), Sequentielle Entscheidungsmodelle oder Bayessche Modelle oder Netze.

Weiterhin können auch verschiedene Kategorien von ML-Modellen zu einem Gesamt-ML-Modell kombiniert werden. Eine solche Modelkombination (engl. Ensemble Learning) ist die Verknüpfung von verschiedenen ML-Modellen, um eine bessere Inferenz zu erreichen. Die kombinierten ML-Modelle bilden ein sogenanntes Ensemble. Es gibt verschiedene Methoden, wie Modelle zusammengeführt werden können, und zwar können sie per Voting, Bagging oder Boosting kombiniert werden.

Zudem gibt es auch noch das sogenannte Automatisierte Maschinelle Lernen. Das automatisierte maschinelle Lernen (AutoML) ist ein Verfahren, nach dem für gegebene Aufgaben oder Datensätze ein Algorithmus versucht, die beste Lernstrategie aus einer bestimmten Anzahl von maschinellen Lernverfahren bzw. ML-Modellen zu bestimmen. Beim AutoML sucht der Algorithmus nach den besten Vorverarbeitungsschritten und den besten maschinellen Lernverfahren bzw. dem besten Ensemble. AutoML kann mit Meta-Learning kombiniert werden. Meta-Learning, auch "Learning to Learn" genannt, ist die Wissenschaft, bei der systematisch beobachtet wird, wie verschiedene Ansätze von ML bei einer Vielzahl von Lernaufgaben abschneiden, und dann aus diesen Erfahrungen (Metadaten) gelernt wird, um neue Aufgaben viel schneller zu lernen, als es sonst möglich wäre.

Eine gute Implementierung vom AutoML bietet die Software-Bibliothek AUTO-SKLEARN (https://www.automl.org/automl/auto-sklearn/). Dieses System kann ein Ensemble von bis 15 Schätzer bilden. Außerdem können dazu noch bis zu 14 Vorverarbeitungsmethoden für Features und vier Vorverarbeitungsmethoden für Datensätze genutzt werden.

Neuronale Netze können dabei z.B. sogenannte "Deep Neural Networks", "Feed Forward Neural Networks", "Recurrent Neural Networks"; "Convolutional Neural Networks" oder "Autoencoder-Neural-Networks" sein. Dabei wird die Anwendung entsprechender maschineller Lernverfahren auf neuronale Netze häufig auch als "Training" des entsprechenden Neuronalen Netzes bezeichnet.

Entscheidungsbäume können beispielsweise als sogenannte "iterative Dichotomizer 3" (ID3), Klassifikations- oder Regressionsbäume (CART) oder auch sogenannte "Random Forests" ausgebildet und eingerichtet sein.

Unter einem ML-Modell oder "Machine-Learning"-Modell wird, insbesondere im Rahmen der vorliegenden Beschreibung, das Ergebnis einer Anwendung eines maschinellen Lernalgorithmus oder Lernverfahrens auf bestimmte Daten verstanden. Ein ML-Modell stellt dabei das digital gespeicherte oder speicherbare Ergebnis der Anwendung des maschinellen Lernalgorithmus oder Lernverfahrens auf die analysierten Daten dar.

Dabei kann das ML-Modell beispielsweise in einer Form vorliegen, gespeichert sein oder speicherbar sein, welche die Anwendung des ML-Modells auf neue Daten zur Erzeugung eines Ergebnisses erlaubt. Eine solche Anwendung eines ML-Modells auf Daten wird auch als "Inferenz" oder "Inference" bezeichnet. Weiterhin kann vorgesehen sein, dass das ML-Modell in der vorliegenden, gespeicherten oder speicherbaren Form auch zum Training des ML-Modells ausgebildet und eingerichtet ist. Es kann aber auch vorgesehen sein, dass das ML-Modell in der vorliegenden, gespeicherten oder speicherbaren Form nicht mehr zum Training des ML-Modells ausgebildet und eingerichtet ist, insbesondere kann das ML-Modell in diesem Fall nur noch zur Anwendung auf Daten zur Erzeugung eines Ergebnisses, der vorstehend genannten "Inferenz", ausgebildet und eingerichtet ist.

Daten zum Erstellen und/oder Trainieren eines ML-Modells gemäß der vorliegenden Erfindung können beispielsweise historische Daten der ersten und/oder zweiten Erfassungseinrichtung sein oder solche Daten umfassen. Weiterhin können Daten zum Erstellen und/oder Trainieren des ML-Modells historische Daten von zur ersten und/oder zweiten Erfassungskomponente baugleichen, ähnlichen oder vergleichbaren Erfassungskomponenten umfassen, oder auch historische Daten von Komponenten der gleichen Kategorie oder des gleichen Typs wie die erste und/oder zweite Erfassungskomponente.

Bei einer Verwendung eines ML-Modells bzw. des ML-Modells mit Messdatendaten weiterer Erfassungskomponenten, oder auch der Verwendung weiterer ML-Modelle mit Messdaten weiterer Erfassungskomponenten, kann ein Erstellen und/oder ein Trainieren eines solchen ML-Modells ebenfalls mit historischen Daten dieser Erfassungskomponenten, vergleichbarer Erfassungskomponenten oder Erfassungskomponenten eines ähnlichen oder vergleichbaren Komponenten-Typs erfolgen.

Auf diese Weise wird im Rahmen der Wirkung des Prozess-ML-Modells auf erfasste Messdaten unter Umständen nicht nur die Auswirkung des Prozessschritts, sondern zusätzlich auch die Änderung der erfassten Messdaten durch Verwendung einer geänderten Erfassungseinrichtung und/oder geänderter Messparameter oder Messanordnungen simuliert.

Unter einem neuronalen Netz wird, zumindest im Zusammenhang mit der vorliegenden Beschreibung, z.B. eine elektronische Einrichtung mit einem Computerprogramm, einem Computerprogramm-Produkt oder auch einer Software verstanden - oder auch das Computerprogramm, das Computerprogramm-Produkt oder auch die Software selbst oder in einer Speichereinrichtung gespeichert - welche ein Netzwerk sogenannter Knoten umfasst, wobei in der Regel jeder Knoten mit mehreren anderen Knoten verbunden ist. Weiterhin wird unter einem neuronalen Netz im Zusammenhang mit der vorliegenden Beschreibung beispielsweise weiterhin ein in einer Speichereinrichtung gespeichertes Computer-Programmprodukt, bzw. eine Software, verstanden, welches beim Ablauf auf einem Computer ein solches Netzwerk gemäß der vorliegenden Beschreibung erzeugt. Die Knoten werden beispielsweise auch als Neuronen, Units oder Einheiten bezeichnet. Dabei hat jeder Knoten mindestens eine Eingangs- und eine Ausgangsverbindung. Als Eingangs-Knoten für ein neuronales Netz, werden solche Knoten verstanden, welche von der Außenwelt Signale (Daten, Reize, Muster oder ähnliches) empfangen können. Unter Ausgabe-Knoten eines neuronalen Netzes werden solche Knoten verstanden, welche Signale, Daten oder ähnliches an die Außenwelt weitergeben können. Unter sogenannten "versteckten Knoten" ("hidden nodes") werden solche Knoten eines neuronalen Netzes verstanden, welche weder als Eingangs- noch als Ausgangs-Knoten ausgebildet sind.

Dabei kann das neuronale Netz beispielsweise als ein sogenanntes tiefes neuronales Netz ("deep neural network" (DNN)) ausgebildet sein. Ein solches "deep neural network" ist ein neuronales Netz, in welchem die Netzknoten in Schichten angeordnet sind (wobei die Schichten selbst ein-, zwei- oder auch höher-dimensional sein können). Ein tiefes neuronales Netz umfasst dabei mindestens eine sogenannte verdeckte Schicht, welche nur Knoten umfassen, die nicht Eingangsknoten oder Ausgangsknoten sind. Das heißt, die verdeckten Schichten haben keine Verbindungen zu Eingangssignalen oder Ausgangssignalen.

Unter dem sogenannten "Deep Learning" wird dabei beispielsweise eine Klasse von maschinellen Lerntechniken verstanden, welche viele Schichten der nichtlinearen Informationsverarbeitung für die überwachte oder nicht-überwachte Merkmalsextraktion und -transformation sowie zur Musteranalyse und - klassifizierung ausnutzt.

Das Neuronales Netz kann beispielsweise auch eine so genannte Auto-Encoder-Struktur aufweisen. Eine derartige Auto-Encoder-Struktur kann beispielsweise geeignet sein, um eine Dimensionalität von Daten zu reduzieren und beispielsweise so Ähnlichkeiten und Gemeinsamkeiten zu erkennen.

Ein Neuronales Netz kann beispielsweise auch als ein so genanntes Klassifizierungs-Netz ausgebildet sein, welches besonders dazu geeignet ist, Daten in Kategorien einzuteilen. Derartige Klassifizierungs-Netze werden beispielsweise in Zusammenhang mit Handschrift-Erkennung eingesetzt.

Eine weitere mögliche Struktur eines neuronalen Netzes kann beispielsweise die Ausgestaltung als so genanntes "Deep-Believe-Network" sein.

Ein neuronales Netz kann beispielsweise auch eine Kombination von mehreren der vorstehend genannten Strukturen aufweisen. So kann beispielsweise die Architektur des neuronalen Netzes eine Auto-Encoder-Struktur umfassen, um die Dimensionalität der Eingangsdaten zu reduzieren, welche dann weiterhin mit einer anderen Netzstruktur kombiniert werden kann, um beispielsweise Besonderheiten und/oder Anomalien innerhalb der datenreduzierten Dimensionalität zu erkennen bzw. die datenreduzierte Dimensionalität zu klassifizieren.

Die die einzelnen Knoten und deren Verbindungen beschreibenden Werte inklusive weiterer ein bestimmtes neuronale Netz beschreibende Werte können beispielsweise in einem das neuronale Netz beschreibenden Wertesatz gespeichert werden. Ein solcher Wertesatz stellt dann beispielsweise eine Ausgestaltung des neuronalen Netzes dar. Wird ein solcher Wertesatz nach einem Training des neuronalen Netzes gespeichert, so wird damit beispielsweise eine Ausgestaltung eines trainierten neuronalen Netzes gespeichert. So ist es beispielsweise möglich, in einem ersten Computersystem das neuronale Netz mit entsprechenden Trainingsdaten zu trainieren, den entsprechenden Wertesatz, welcher diesem neuronalen Netz zugeordnet ist, dann zu speichern und als Ausgestaltung des trainierten neuronalen Netzes in ein zweites System zu transferieren.

Weiterhin kann auch eine Software bzw. ein Computerprogramm, welches ein neuronales Netz realisiert, eine Ausgestaltung des neuronalen Netzes darstellen. Und sowohl eine Variante eines solchen Computerprogramms, welche sowohl zur Inferenz als auch dem Training dieses neuronalen Netzes ausgebildet ist, stellt eine mögliche Ausgestaltung dieses neuronalen Netzes dar, als auch eine Variante eines solchen Computerprogramms, welches nur für eine Inferenz des neuronalen Netzes ausgebildet und eingerichtet und/oder optimiert ist.

Ein neuronales Netz kann in der Regel trainiert werden, indem über verschiedenste bekannte Lernmethoden durch Eingabe von Eingangsdaten in das neuronale Netz und Analyse der dann entsprechenden Ausgangsdaten aus dem neuronalen Netz Parameterwerte für die einzelnen Knoten oder für deren Verbindungen ermittelt werden. Auf diese Weise kann ein neuronales Netz mit bekannten Daten, Mustern, Reizen oder Signalen auf an sich heute bekannte Weise trainiert werden, um das so trainierte Netz dann nachfolgend beispielsweise zur Analyse weiterer Daten verwenden zu können.

Allgemein wird unter dem Training des neuronalen Netzes verstanden, dass die Daten, mit welchen das neuronale Netz trainiert wird, im neuronalen Netz mithilfe eines oder mehrerer Trainings-Algorithmen verarbeitet werden, um so genannte Vorspannungswerte ("Bias"), Gewichtungswerte ("weights") und/oder Transferfunktionen ("Transfer Functions") der einzelnen Knoten des neuronalen Netzes bzw. der Verbindungen zwischen jeweils zwei Knoten innerhalb des neuronalen Netzes zu berechnen bzw. zu verändern.

Zum Training eines neuronalen Netzes, z.B. gemäß der vorliegenden Beschreibung, kann beispielsweise eine der Methoden des so genannten "überwachten Lernens" ("supervised learning") verwendet werden. Hierbei werden einem Netz durch Training mit entsprechenden Trainingsdaten diesen Daten jeweils zugeordnete Ergebnisse oder Fähigkeiten antrainiert. Weiterhin kann zum Training des neuronalen Netzes auch eine Methode des so genannten unüberwachten Trainings ("unsupervised learning") verwendet werden. Ein solcher Algorithmus erzeugt für eine gegebene Menge von Eingaben beispielsweise ein Modell, welches die Eingaben beschreibt und daraus Vorhersagen ermöglicht. Dabei gibt es beispielsweise Clustering-Verfahren, mit welchen sich die Daten in verschiedene Kategorien einteilen lassen, wenn sie sich beispielsweise durch charakteristische Muster voneinander unterscheiden.

Beim Trainieren eines neuronalen Netzes können auch überwachte und unüberwachte Lernmethoden kombiniert werden, beispielsweise wenn Teilen der Daten antrainierbare Eigenschaften oder Fähigkeiten zugeordnet sind, während dies bei einem anderen Teil der Daten nicht der Fall ist.

Weiterhin können auch noch Methoden des so genannten bestärkenden Lernens ("reinforcement learning") für das Training des neuronalen Netzes, zumindest unter anderem, verwendet werden.

Beispielsweise kann ein Training, welches eine relativ hohe Rechenleistung eines entsprechenden Computers erfordert, auf einem hoch-performanten System geschehen, während weitere Arbeiten oder Datenanalysen mit dem trainierten neuronalen Netz dann durchaus auf einem niedriger-performanten System durchgeführt werden können. Solche weiteren Arbeiten und/oder Datenanalysen mit dem Trainieren neuronalen Netz können zum Beispiel auf einem Edge-Device und/oder auf einer Steuereinrichtung, einer Speicherprogrammierbaren Steuerung oder einer modularen Speicherprogrammierbaren Steuerung oder weiteren entsprechenden Einrichtungen gemäß der vorliegenden Beschreibung erfolgen.

Maschinelles Lernen und/oder die Überwachung eines maschinellen Lernsystems arbeiten in zwei Hauptphasen: Training und Inferenz.

Inferenz ist der Prozess der Generierung eines Ergebnisses des ML-Modells durch Eingabe neuer Daten in diese Artefakte/Modelle, um ein Ergebnis zu erzeugen, während die neuen Daten in der Regel nicht für das Training und/oder die Einrichtung des ML-modells verwendet wurden. Z.B. Machine Learning Inferenz ist die Fähigkeit eines maschinellen Lernsystems, Vorhersagen aus neuartigen Daten zu treffen. Es gibt drei Schlüsselkomponenten, die für maschinelles Lernen oder Überwachungsinferenz benötigt werden: eine Datenquelle, ein maschinelles Lern- oder Überwachungssystem zur Verarbeitung der Daten und ein Datenziel.

Training bezieht sich auf den Prozess der Verwendung eines maschinellen Lernalgorithmus zum Erstellen eines Modells. Das Training beinhaltet die Verwendung eines Deep-Learning-Frameworks (z. B. TensorFlow) und eines Trainingsdatensatzes. IoT-Daten bieten eine Quelle für Trainingsdaten, die Datenwissenschaftler und Ingenieure verwenden können, um Machine Learning-Modelle für eine Vielzahl von Anwendungsfällen zu trainieren, von der Fehlererkennung bis hin zu Consumer Intelligence.

Inferenz bezieht sich auf den Prozess der Verwendung eines trainierten maschinellen Lernalgorithmus, um eine Vorhersage zu treffen. IoT-Daten können als Eingabe für ein trainiertes Machine Learning-Modell verwendet werden und ermöglichen Vorhersagen, die die Entscheidungslogik auf dem Gerät, am Edge-Gateway oder an anderer Stelle im IoT-System steuern können.

Ein trainiertes, bzw. zum Trainieren eingerichtetes, neuronales Netzwerk ist im Wesentlichen eine relativ aufwändige Software. Aber der Aufwand, den man treiben musste, um das neuronale Netz trainieren zu können, ist später dann viel mehr, als man braucht, um das trainierte neuronale Netz einzusetzen. Daher ist es häufig wünschenswert, den für das Training notwendigen "Ballast" abzuwerfen, wenn man das trainierte neuronale Netz dann später einsetzen will.

Während dies ein brandneuer Bereich des Bereichs der Informatik ist, gibt es zwei Hauptansätze, um dieses riesige neuronale Netzwerk zu nehmen und es für Geschwindigkeit und verbesserte Latenz in Anwendungen zu modifizieren.

Der erste Ansatz betrachtet Teile des neuronalen Netzwerks, die nach dem Training nicht aktiviert werden. Diese Abschnitte werden nicht benötigt und können "weggeschnitten" werden. Der zweite Ansatz sucht nach Möglichkeiten, mehrere Schichten des neuronalen Netzwerks zu einem einzigen Rechenschritt zu verschmelzen.

Weiterhin kann vorgesehen sein, dass das mindestens eine Prozess-ML-Modell als ein Prozess-ML-Modell derart ausgebildet und eingerichtet ist, dass eine Anwendung des Prozess-ML-Modells auf die ersten und zweiten Messdaten eine Änderung der ersten und zweiten Messdaten durch eine Auswirkung des Prozessschritts auf den ersten und zweiten Oberflächenbereich simuliert oder teilweise simuliert,
oder, dass der Prozessschritt mehrere Prozess-Teilschritte umfasst und jedem der Prozess-Teilschritte ein Prozess-ML-Modell des mindestens einen Prozess-ML-Modells zugeordnet ist, wobei jedes der Prozess-ML-Modelle derart ausgebildet und eingerichtet ist, dass eine Anwendung dieses Prozess-ML-Modelles auf die ersten und zweiten Messdaten eine Änderung der ersten und zweiten Messdaten durch eine Auswirkung des dem Prozess-ML-Modell zugeordneten Prozess-Teilschritts auf den ersten und zweiten Oberflächenbereich simuliert oder teilweise simuliert.

Bei einer Zuordnung eines einzelnen Prozessschritts zu einem Prozess-ML-Modell kann, wie vorstehend bereits dargestellt, vorgesehen sein, dass das mindestens eine Prozess-ML-Modell als ein Prozess-ML-Modell derart ausgebildet und eingerichtet ist, dass eine Anwendung des Prozess-ML-Modells auf bezüglich eines Oberflächenbereichs vor Durchführung des Prozessschritts erfasste Messdaten eine Änderung dieser Messdaten durch eine Auswirkung des Prozessschritts auf den genannten Oberflächenbereich simuliert oder zumindest teilweise simuliert. Dann können die durch die Anwendung des Prozess-ML-Modells auf die genannten Messdaten erzeugten modifizierten Messdaten ein Identifizieren des Oberflächenbereichs nach Durchführung des Prozessschritts vereinfachen oder unter Umständen überhaupt erst möglich machen.

Weiterhin kann vorgesehen sein, dass der Prozessschritt mehrere Prozess-Teilschritte umfasst, dafür allerdings nur ein Prozess-ML-Modell für den gesamten, aus mehreren Teilschritten zusammengesetzten Prozessschritt erstellt wird. In diesem Fall kann ebenfalls vorgesehen sein, dass das Prozess-ML-Modell die Auswirkungen des gesamten Prozessschritts auf entsprechende Messdaten simuliert oder zumindest teilweise simuliert oder eine derartige Simulation umfasst.

In einem weiteren Fall, in dem ein bestimmter Prozessschritt mehrere Prozess-Teilschritte umfasst, kann vorgesehen sein, dass jedem der Prozess-Teilschritte ein Prozess-ML-Modell des genannten mindestens einen Prozess-ML-Modells zugeordnet ist. Dann simuliert jedes der Prozess-ML-Modelle die Auswirkungen eines bestimmten Prozess-Teilschritts auf entsprechende Messdaten bzw. das Prozess-ML-Modell umfasst eine derartige Simulation. Bei einem aus Prozess-Teilschritten bestehenden Prozessschritt kann eine Berechnung von durch den gesamten Prozessschritt modifizierten Messdaten dann derart erfolgen, dass Messdaten bezüglich eines Oberflächenbereichs der noch nicht vom Prozessschritt bearbeiteten Materialbahn erfasst werden. Auf diese Messdaten wird dann das Prozess-ML-Modell des ersten Prozess-Talschritts angewendet. Auf die dabei erzeugten modifizierten Messdaten wird dann das Prozess-ML-Modell des nächstfolgenden Prozess-Teilschritts angewendet um weiter modifizierte Messdaten erzeugen. Auf diese Weise wird in der Reihenfolge der durchgeführten Prozess-Teilschritte durch eine Anwendung der jeweils zugeordneten Prozess-ML-Modelle die Wirkung des gesamten Prozessschritts auf den genannten Oberflächenbereich simuliert. Diejenigen Messdaten, die nach Anwendung des Prozess-ML-Modells des letzten Prozess-Teilschritts des Prozessschritts erhalten werden, entsprechen dann den modifizierten Messdaten gemäß der vorliegenden Beschreibung.

Dass eine Anwendung eines Prozess-ML-Modells auf bestimmte Messdaten eine bestimmte Simulation umfasst, bedeutet im Rahmen der vorliegenden Beschreibung, dass die genannte Wirkung des Prozess-ML-Modells nur ein Teil der gesamten Wirkung des Prozess-ML-Modells ist bzw. sein kann.

So kann beispielsweise die Formulierung, dass eine Anwendung eines Prozess-ML-Modells auf bestimmte Messdaten eine Änderung der Messdaten durch eine Auswirkung eines bestimmten Prozessschritts auf einen den Messdaten zugeordneten Oberflächenbereich simuliert oder teilweise simuliert oder eine derartige Simulation umfasst, bedeuten, dass die genannte Anwendung des Prozess-ML-Modells auf die Messdaten neben der Wirkung des Prozessschritts auf die Messdaten beispielsweise auch noch Einflüsse weiterer Prozesse, Einstellungen, Parameter, Erfassungseinrichtungen, Messanordnungen oder ähnliches auf die Messdaten simuliert. So kann das Prozess-ML-Modell beispielsweise derart ausgebildet und eingerichtet sein, dass eine Anwendung des Prozess-ML-Modells auf bestimmte Messdaten eine Änderung dieser Messdaten durch eine Auswirkung des Prozessschritts auf den den Messdaten zugeordneten Oberflächenbereich, sowie durch weitere Erfassungseinrichtung, weitere Messparameter und/oder eine weitere Messanordnung simuliert oder teilweise simuliert.

Dabei wird unter der Formulierung "simuliert" im Rahmen der vorliegenden Beschreibung sowohl eine relativ gute Näherung bzw. Simulation als auch jede auch nur teilweise, näherungsweise, oder auch nur rudimentäre Simulation der Auswirkung des Prozessschritts auf die Messdaten verstanden. Weiterhin kann die Qualität einer solchen Simulation auch von den Messdaten selbst abhängen, oder zumindest teilweise abhängen bzw. beeinflusst werden. So kann für einzelne der Messdaten das Ergebnis der Anwendung eines bestimmten Prozess-ML-Modells gemäß der vorliegenden Beschreibung eine relativ gute Simulation des Prozessschritts auf die Messdaten darstellen, während sich für andere Messdaten bei Anwendung dieses Prozess-ML-Modells nur eine schlechtere oder sogar ungenügende oder unbrauchbare Simulation ergeben kann.

Weiterhin kann vorgesehen sein, dass jedes des mindestens einen Prozess-ML-Modells unter Verwendung der nachfolgenden Verfahrensschritte trainiert wurde:
Erfassen von Trainingsdaten eines Oberflächenbereichs einer Trainings-Materialbahn,
Bearbeiten der Trainings-Materialbahn oder des Oberflächenbereichs der Trainings-Materialbahn durch den Prozessschritt oder zugeordneten Prozess-Teilschritt,
Erfassen von modifizierten Trainingsdaten des Oberflächenbereichs,
Trainieren des Prozess-ML-Modells unter Verwendung der Trainingsdaten sowie der modifizierten Trainingsdaten,
Speichern des trainierten Prozess-ML-Modells.

Dabei kann die Trainings-Materialbahn als Materialbahn gemäß der vorliegenden Beschreibung ausgebildet und eingerichtet sein. Eine Trainings-Materialbahn kann jede Materialbahn sein, auch im Rahmen eines entsprechenden Produktionsprozesses. Dass im Rahmen der Beschreibung des Trainingsprozesses für ein Prozess-ML-Modell verwendete Wort "Trainings-Materialbahn" dient nur der Klarheit im Rahmen der vorliegenden Beschreibung.

Dass eine Anwendung eines Prozess-ML-Modells für einen Prozessschritt auf bezüglich eines Oberflächenbereichs einer Materialbahn vor der Anwendung des Prozessschritts erfasste Messdaten eine Änderung der Messdaten durch eine Auswirkung des Prozessschritts auf den Oberflächenbereich simuliert, oder zumindest teilweise simuliert, kann dabei derart ausgebildet und eingerichtet sein, dass das Prozess-ML-Modell durch das vorstehend genannte Verfahren, und/oder ein vergleichbares Verfahren, trainiert wurde.

Betrachtet wird beispielsweise ein Prozess-ML-Modell für einen bestimmten Prozessschritt, und Messdaten, die vor einer Bearbeitung der Materialbahn durch den Prozessschritts bezüglich eines Oberflächenbereichs der Materialbahn erfasst wurden. Dass die Anwendung des Prozess-ML-Modells auf die erfassten Messdaten eine Änderung der Messdaten durch eine Auswirkung des Prozessschritts auf den Oberflächenbereich simuliert, oder zumindest teilweise simuliert, oder eine derartige Simulation umfasst, kann dabei derart ausgebildet und eingerichtet sein, dass das Prozess-ML-Modell durch das vorstehend genannte Verfahren, und/oder ein vergleichbares Verfahren gemäß der vorliegenden Beschreibung, trainiert wurde.

Das Prozess-ML-Modell kann beispielsweise als ein neuronales Netz, z.B. ein tiefes neuronales Netz, ausgebildet und eingerichtet sein. In diesem Fall kann das neuronale Netz beispielsweise vermittels überwachten Lernens gemäß der vorliegenden Beschreibung gemäß einem Trainingsverfahren gemäß der vorliegenden Beschreibung trainiert werden bzw. trainiert worden sein.

In vorstehend genannten Fall kann beispielsweise vorgesehen sein, dass ein Trainingsverfahren gemäß der vorliegenden Beschreibung derart ausgebildet und eingerichtet ist, dass die Trainingsdaten in das zu trainierende ML-Modell bzw. neuronale Netz eingegeben werden und vom zu trainierenden neuronalen Netz dann Ergebnisdaten ausgegeben werden. Das Training des ML-Modells, bzw. des neuronalen Netzes, erfolgt dann, indem Abweichungen der modifizierten Trainingsdaten von den Ergebnisdaten berechnet werden, und diese Abweichungen zum Training des ML-Modells bzw. neuronalen Netzes unter Verwendung an sich bekannter Verfahren zum überwachten Lernen, wie auch an anderer Stelle der vorliegenden Beschreibung kurz skizziert, herangezogen werden.

Dabei kann vorgesehen sein, dass das Erfassen der Trainingsdaten mit der ersten Erfassungseinrichtung, oder einer zur ersten Erfassungseinrichtung baugleichen Erfassungseinrichtung, und ersten Messparametern sowie einer ersten Messanordnung erfolgt. Weiterhin kann vorgesehen sein, dass die modifizierten Trainingsdaten mit der gleichen Erfassungseinrichtung unter Verwendung der gleichen Messparameter und Messanordnung erfasst werden. In diesem Fall ist das jeweils trainierte Prozess-ML-Modell derart ausgebildet und eingerichtet, dass eine Anwendung eine Anwendung des Prozess-ML-Modells auf die ersten und/oder zweiten Messdaten eine Änderung der ersten und/oder zweiten Messdaten durch eine Auswirkung des Prozessschritts auf den ersten und zweiten Oberflächenbereich simuliert oder teilweise simuliert. Insbesondere kann in diesem Fall das jeweils trainierte Prozess-ML-Modell derart ausgebildet und eingerichtet sein, dass eine Anwendung eine Anwendung des Prozess-ML-Modells auf die ersten und/oder zweiten Messdaten eine Änderung der ersten und/oder zweiten Messdaten nur durch eine Auswirkung des Prozessschritts auf den ersten und zweiten Oberflächenbereich simuliert oder teilweise simuliert.

Weiterhin kann auch vorgesehen sein, dass das Erfassen der Trainingsdaten mit der ersten Erfassungseinrichtung, oder einer zur ersten Erfassungseinrichtung baugleichen Erfassungseinrichtung, und ersten Messparametern sowie einer ersten Messanordnung erfolgt. Weiterhin kann vorgesehen sein, dass die modifizierten Trainingsdaten mit der zweiten Erfassungseinrichtung, oder einer zur zweiten Erfassungseinrichtung baugleichen Erfassungseinrichtung unter Verwendung der zweiter Messparameter und/oder einer zweiten Messanordnung erfasst werden. In diesem Fall ist das jeweils trainierte Prozess-ML-Modell derart ausgebildet und eingerichtet, dass eine Anwendung des Prozess-ML-Modells auf die ersten und/oder zweiten Messdaten eine Änderung der ersten und/oder zweiten Messdaten durch eine Auswirkung des Prozessschritts auf den ersten und zweiten Oberflächenbereich sowie durch die zweite Erfassungseinrichtung, die zweiten Messdaten und/oder die zweite Messanordnung simuliert oder teilweise simuliert.

Die vorstehend genannte Aufgabe wird weiterhin gelöst von einem System zum Nachverfolgen von Orten auf einer bewegten oder bewegbaren Materialbahn im Rahmen einer Bearbeitung der Materialbahn, wobei das System zur Durchführung eines Verfahrens gemäß der vorliegenden Beschreibung ausgebildet und eingerichtet ist.

Ein solches System umfasst:
- eine erste Erfassungseinrichtung zur Erfassung der ersten Messdaten des ersten Oberflächenbereichs der Materialbahn sowie des ersten Zeitpunkts, und zur Erfassung der zweiten Messdaten des zweiten Oberflächenbereichs der Materialbahn sowie des zweiten Zeitpunkts,
- eine zweite Erfassungseinrichtung zur Erfassung von Messdaten bezüglich Oberflächenbereichen der bearbeiteten Materialbahn sowie zur Erfassung von der jeweiligen Erfassung der Oberflächenbereiche jeweils zugeordneten Erfassungszeitpunkten,
- eine Recheneinrichtung, die zum Vergleich der erfassten Messdaten bezüglich der Oberflächenbereiche der bearbeiteten Materialbahn mit den ersten und/oder zweiten Messdaten, sowie zum Identifizieren des ersten und/oder zweiten Oberflächenbereichs gemäß der Verfahrensschritte d. und e. eines Verfahrens gemäß der vorliegenden Beschreibung ausgebildet und eingerichtet ist.

Dabei kann die bewegte oder bewegbaren Materialbahn, die Bearbeitung der Materialbahn, die Erfassungseinrichtungen, die Oberflächenbereiche der Materialbahn, die Messdaten, die Zeitpunkte sowie das Identifizieren des ersten und/oder zweiten Oberflächenbereichs sowie der Vergleich der erfassten Messdaten bezüglich der Oberflächenbereiche gemäß der vorliegenden Beschreibung ausgebildet und eingerichtet sein.t

Die erste Erfassungseinrichtung kann beispielsweise zur Erfassung der ersten Messdaten des ersten Oberflächenbereichs der unbearbeiteten Materialbahn sowie des ersten Zeitpunkts, und zur Erfassung der zweiten Messdaten des zweiten Oberflächenbereichs der unbearbeiteten Materialbahn sowie des zweiten Zeitpunkts ausgebildet und eingerichtet sein. Dies kann beispielsweise derart ausgebildet und eingerichtet sein, dass die Erfassung der ersten und zweiten Messdaten mit der ersten Erfassungseinrichtung vor einem Bearbeiten der Materialbahn in dem Prozessschritt erfolgt, beispielsweise vor einem Bearbeiten der Materialbahn gemäß Verfahrensschritt c. gemäß der vorliegenden Beschreibung.

Dabei kann die bewegte bzw. bewegbare Materialbahn beispielsweise in einer Transportrichtung mit einer Transportgeschwindigkeit und/oder einem Transportgeschwindigkeitsprofil bewegt werden. Beispielsweise kann die Materialbahn weiterhin in einer Bewegungsrichtung bewegt werden.

Das genannte System ermöglicht es im Rahmen einer Prozessierung einer Materialbahn, ortsaufgelöst die Wirkung der Prozessierung nachzuverfolgen. Dabei ist es beispielsweise ein Ziel, durch Wiedererkennung von Oberflächenbereichen im Rahmen einer Prozessierung der Materialbahn, quasi ein bewegtes Koordinatensystem für die Materialbahn zu erzeugen, einzurichten und/oder zu kalibrieren, um auf diese Weise z.B. die Wirkung der Prozessierung auf die Materialbahn ortsaufgelöst zu überwachen bzw. überwachen zu können. Weiterhin können auch durch Interpolation zwischen verschiedenen der betrachteten Oberflächenbereiche weitere Bereiche der Materialbahn überwacht und/oder analysiert werden.

Wie vorstehend bereits erläutert lässt sich dadurch, dass das genannte System zur Durchführung eines Verfahrens gemäß der vorliegenden Beschreibung ausgebildet und eingerichtet ist, die Erkennungsgenauigkeit von Oberflächenbereichen, Identifikations-Stellen und/oder-Markierungen im Rahmen der Bearbeitung von Materialbahnen verbessern bzw. erhöhen.

Die Recheneinrichtung kann beispielsweise als ein Computer, ein EDGE-Device, eine PLC, eine virtuelle PLC, ein- oder mehrere Module einer PLC oder virtuellen PLC, eine Steuereinrichtung, eine Cloud, ein Automatisierungs-Server, eine Steuer Applikation in einer Cloud oder als eine vergleichbare Recheneinrichtung ausgebildet und eingerichtet sein oder derartigen Komponenten umfassen. Die Recheneinrichtung kann auch als ein System aus mehreren der vorstehend genannten Komponenten ausgebildet und eingerichtet sein, die kommunikativ gekoppelt sind bzw. sein können.

In einer Ausgestaltung des Verfahrens unter Verwendung von einem oder mehreren Prozess-ML-Modellen gemäß der vorliegenden Beschreibung, kann die Recheneinrichtung beispielsweise das Prozess-ML-Modell umfassen. Weiterhin kann vorgesehen sein, dass das Prozess-ML-Modell in einer Teileinrichtung der Recheneinrichtung, beispielsweise einem Modul für eine Steuereinrichtung, einem gesonderten EDGE Device, einer Cloud, oder auch einer weiteren Recheneinrichtung gemäß der vorliegenden Beschreibung vorgesehen und eingerichtet ist. Dabei kann weiterhin vorgesehen sein, dass ein Training eines solchen Prozess-ML-Modells entweder ebenfalls in einer der genannten Einrichtungen erfolgt oder auch in einer weiteren Recheneinrichtung gemäß der vorliegenden Beschreibung erfolgt. Insbesondere kann vorgesehen sein, dass das Training eines Prozess-ML-Modells gemäß der vorliegenden Beschreibung in einer Recheneinrichtung mit relativ hoher Rechenleistung, wie beispielsweise einem Computer, einer Workstation, einem Server, einer Cloud, einem EDGE Device oder einer vergleichbaren Recheneinrichtung erfolgt.

Dabei kann die Recheneinrichtung beispielsweise einen Speicherbereich zum Speichern von Messdaten, sowohl von Messdaten der Materialbahn vor einer Bearbeitung durch den Prozessschritt als auch von Messdaten nach der Bearbeitung der Materialbahn durch den Prozessschritt aufweisen. Weiterhin kann der Speicherbereich, oder auch ein weiterer Speicherbereich, auch beispielsweise zum Speichern von Erfassungszeitpunkten sowie Prozessparametern und Transportgeschwindigkeiten vorgesehen und eingerichtet sein. Weiterhin kann die Recheneinrichtung zum Vergleichen von Messdaten ausgebildet und eingerichtet sein. Ein derartiger Vergleich kann mit aus dem Stand der Technik bekannten Vergleichsverfahren, Fingerprint-Verfahren oder Identifikations-Verfahren erfolgen. Sind die Messdaten als Bilddaten ausgebildet und eingerichtet, so können beispielsweise aus dem Stand der Technik bekannte Bild-Vergleichsverfahren oder Bild-Erkennungs-Verfahren verwendet werden.

Die Steuereinrichtung kann jede Art von Computer oder Computersystem sein, welcher zur Steuerung einer Vorrichtung, einer Maschine, einer Anlage, eines Apparats, einer Komponente oder eines Geräts ausgebildet und eingerichtet ist. Bei der Steuerung kann es sich auch um einen Computer, ein Computersystem oder eine sogenannte Cloud handeln, auf der eine Steuerungssoftware oder eine Steuerungssoftware-Anwendung, zum Beispiel eine Steuerungsanwendung, implementiert, instanziiert oder installiert ist. Eine solche auf einem Computer oder in einer Cloud implementierte Steuerungsanwendung kann z.B. als eine oder mehrere Applikationen mit der Funktionalität einer speicherprogrammierbaren Steuerung ausgebildet und eingerichtet sein.

Die Steuereinrichtung kann weiterhin auch als ein sogenanntes Edge-Device ausgebildet und eingerichtet sein, wobei ein solches Edge-Device beispielsweise eine Applikation zur Steuerung von Vorrichtungen oder Anlagen umfassen kann. Beispielsweise kann eine solche Applikation als eine Applikation mit der Funktionalität einer speicherprogrammierbaren Steuerung ausgebildet und eingerichtet sein. Das Edge-Device kann dabei beispielsweise mit einer weiteren Steuereinrichtung einer Vorrichtung oder Anlage verbunden sein oder auch unmittelbar mit einer zu steuernden Vorrichtung oder Anlage. Weiterhin kann das Edge-Device derart ausgebildet und eingerichtet sein, dass es zusätzlich noch mit einem Datennetzwerk oder einer Cloud verbunden ist bzw. zur Verbindung mit einem entsprechenden Datennetzwerk oder einer entsprechenden Cloud ausgebildet und eingerichtet ist.

Die Steuereinrichtung kann beispielsweise auch als eine sogenannte speicherprogrammierbare Steuerung (SPS) ausgebildet und eingerichtet sein (im Englischen "programmable logic controller" bzw. PLC). Weiterhin kann die Steuereinrichtung auch als eine sogenannte modulare speicherprogrammierbare Steuerung (modulare SPS) eingerichtet und ausgestaltet sein.

Die Steuereinrichtung kann dabei ein Steuerungsmodul oder Zentralmodul umfassen, welche zum Ablauf eines Steuerprogramms ausgebildet und eingerichtet ist. Dabei kann das Steuerungsmodul beispielsweise die durch den Standard IEC 61131 definierte Funktionalität umfassen.

Dabei kann das Steuerungsmodul beispielsweise auch als eine Software-Applikation ausgebildet und eingerichtet sein, welche zum Echtzeit-Ablauf eines Steuerprogramms zur Steuerung der Bearbeitungskomponente ausgebildet und eingerichtet ist. Dabei kann die Software-Applikation beispielsweise die im Standard IEC 61131 und/oder IEC 61499 definierte Funktionalität umfassen.

Das Steuerungsmodul kann weiterhin auch als ein separates mechanisches Modul oder eine separate Baugruppe ausgebildet und eingerichtet sein, welche zum Echtzeitablauf eines Steuerprogramms ausgebildet und eingerichtet ist. Auch ein solches mechanisches Modul bzw. eine derartige Baugruppe kann beispielsweise die durch den Standard IEC 61131 und/oder IEC 61499 definierte Funktionalität umfassen. Beispielsweise kann das Steuerungsmodul als speicherprogrammierbare Steuerung selbst oder beispielsweise als ein Zentralmodul einer modularen speicherprogrammierbaren Steuerung ausgebildet und eingerichtet sein. Dabei kann das Steuerungsmodul beispielsweise die Funktionalität einer Eingabe-Ausgabe-Baugruppe umfassen oder auch keine Funktionalität einer Eingabe-Ausgabe-Baugruppe umfassen.

Bei einer speicherprogrammierbaren Steuerung, kurz SPS, handelt es sich um eine Komponente, die programmiert und eingesetzt wird, um eine Anlage oder Maschine zu regeln bzw. zu steuern. In SPSen können spezifische Funktionen wie beispielsweise eine Ablaufsteuerung implementiert werden, so dass auf diese Weise sowohl die Eingangs- als auch die Ausgangssignale von Prozessen oder Maschinen gesteuert werden können. Definiert wird die speicherprogrammierbare Steuerung beispielsweise im Standard IEC 61131 und/oder IEC 61499.

Um eine speicherprogrammierbare Steuerung an die Anlage bzw. Maschine anzubinden, kommen sowohl Aktoren, die im Allgemeinen an den Ausgängen der speicherprogrammierbaren Steuerung angeschlossen sind, als auch Sensoren zum Einsatz. Des Weiteren werden Statusanzeigen verwendet. Grundsätzlich befinden sich die Sensoren an den SPS-Eingängen, wobei durch sie die speicherprogrammierbare Steuerung Informationen darüber erhält, was in der Anlage bzw. Maschine vonstatten geht. Als Sensoren gelten beispielsweise: Lichtschranken, Endschalter, Taster, Inkrementalgeber, Füllstandsensoren, Temperaturfühler. Als Aktoren gelten z.B.: Schütze zum Einschalten elektrischer Motoren, elektrische Ventile für Druckluft oder Hydraulik, Antriebssteuerungsmodule, Motoren, Antriebe.

Die Realisierung eine SPS kann auf verschiedene Art und Weise erfolgen. Das heißt, sie kann als elektronisches Einzelgerät, als Softwareemulation, als sogenannte "virtuelle PLC" oder "Soft-PLC", als PC-Einsteckkarte usw. verwirklicht werden. Häufig finden sich auch modulare Lösungen, im Rahmen derer die SPS aus mehreren Steckmodulen zusammengebaut wird. Solche Module können beispielsweise ein zentrales Steuerungsmodul, ein Eingabe-Ausgabe-Modul, ein Kommunikationsmodul, ein Umrichter Modul, ein Applikationsmodul oder vergleichbare Module sein.

Unter einer virtuellen PLC oder einer sogenannten Soft-PLC wird eine speicherprogrammierbare Steuerung verstanden, welche als Softwareapplikation realisiert ist und auf einer Computereinrichtung, einem Industrie-PC oder sonstigen PC, einer Recheneinrichtung, oder z.B. auch einem EDGE Device, ablaufen kann oder abläuft. Auch in diesem Fall gibt es die Möglichkeit eine virtuelle PLC oder Soft-PLC modular auszuführen. Dabei werden dann einzelne Funktionalitäten einer speicherprogrammierbaren Steuerung bzw. PLC als einzelne Software-Module ausgestaltet, welche über eine sogenannte Middleware oder verbindbar sind. Solche Module können beispielsweise ein zentrales Steuerung-Software Modul (Z.B. Welche zumindest unter anderem die vom Standard IEC 61131 vorgegebenen Eigenschaften umfasst), ein Kommunikationsmodul zur Ankopplung an einen Feldbus, an bestimmte Geräte oder Vorrichtungen, an ein Ethernet, einen OPC-UA oder vergleichbare Kommunikationsstandards, ein Webserver-Modul, ein HMI-Modul (HMI: human machine interface) und/oder ein Applikationsmodul gemäß der vorliegenden Beschreibung sein.

Eine modulare speicherprogrammierbare Steuerung kann dabei derart ausgebildet und eingerichtet sein, dass mehrere Module vorgesehen sein können oder sind, wobei in der Regel neben einem sogenannten Zentralmodul (das auch als Steuerungs-Zentralmodul oder CPU bezeichnet wird) das zum Ablauf eines Steuerprogramms z.B. zur Steuerung einer Komponente, Maschine oder Anlage (bzw. eines Teils davon) ausgebildet und eingerichtet ist, ein oder mehrere Erweiterungsmodule vorgesehen sein können. Solche Erweiterungsmodule können beispielsweise als eine Strom-/Spannungsversorgung ausgebildet und eingerichtet sein oder auch zur Ein- und/oder Ausgabe von Signalen oder weiterhin auch als ein Funktionsmodul oder Applikationsmodul zur Übernahme spezieller Aufgaben (z.B. ein Zähler, ein Umrichter, Datenverarbeitung mit künstliche-Intelligenz-Methoden (umfasst z.B. ein Neuronales Netz oder ein anderes ML-Modell) ...). Im vorliegenden Fall kann beispielsweise vorgesehen sein, dass ein Prozess-ML-Modell in einem solchen Modul für eine speicherprogrammierbare Steuerung implementiert ist.

Beispielsweise kann ein Funktionsmodul oder Applikationsmodul auch als ein AI-Modul zur Ausführung von Aktionen unter Verwendung künstlicher Intelligenz-Verfahren ausgebildet und eingerichtet sein. Ein solches Funktionsmodul kann beispielsweise ein Neuronales Netz oder ein ML-Modell gemäß der vorliegenden Beschreibung oder ein weiteres ML-Modell gemäß der vorliegenden Beschreibung umfassen.

Ein Edge-Device oder Edge-Gerät kann beispielsweise eine Applikation zur Steuerung von Vorrichtungen oder Anlagen umfassen kann. Beispielsweise kann eine solche Applikation als eine Applikation mit der Funktionalität einer speicherprogrammierbaren Steuerung ausgebildet und eingerichtet sein. Das Edge-Device kann dabei beispielsweise mit einer weiteren Steuereinrichtung einer Vorrichtung oder Anlage verbunden sein oder auch unmittelbar mit einer zu steuernden Vorrichtung oder Anlage. Weiterhin kann das Edge-Device derart ausgebildet und eingerichtet sein, dass es zusätzlich noch mit einem Datennetzwerk oder einer Cloud verbunden ist bzw. zur Verbindung mit einem entsprechenden Datennetzwerk oder einer entsprechenden Cloud ausgebildet und eingerichtet ist.

Ein Edge-Device kann weiterhin zur Realisierung zusätzlicher Funktionalitäten im Zusammenhang mit beispielsweise der Steuerung einer Maschine, Anlage oder Komponente - oder Teilen davon - ausgebildet und eingerichtet sein. Solche Funktionalitäten können beispielsweise sein:
- Daten sammeln und Übertragen in die Cloud und/oder eine entsprechende Vorverarbeitung, Kompression und/oder Analyse solcher Daten;
- eine Analyse von Daten z.B. mit AI-Verfahren, z.B. mit neuronalen Netzen oder entsprechenden ML-Modellen. Das Edge-Device kann dafür z.B. ein ML-Modell umfassen;
- Management oder Durchführung eines Trainings eines neuronalen Netzes oder ML-Modells. Das Training selbst kann dabei zumindest teilweise im Edge-Device selbst, oder aber zumindest u.a. auch in einer Cloud erfolgen. Erfolgt ein Training in einer Cloud, kann das Edge-Device z.B. dazu ausgebildet sein, das trainierte neuronale Netz oder ML-Modell herunterzuladen und nachfolgend zu verwenden.

Nachfolgend wird am Beispiel einer Nachverfolgung (ein sogenanntes "Tracking" oder "Tracing") von Produktionsschritten bzw. -prozessen bei einer Elektrodenfertigung im Rahmen einer Batterieproduktion die vorliegende Erfindung beispielhaft näher erläutert.

Bei der Herstellung von Batteriezellen ist die Herstellung der Batterie-Elektroden ein wichtiger Schritt. Diese Elektrodenherstellung besteht aus mehreren getrennten, aufeinander folgenden Schritten, in denen große Materialbahn-Rollen, sogenannte "Foliencoils" (z.B. Materialbahnen von bis zu 4 km Aluminium-Bahn oder Kupfer-Bahn) verarbeitet werden.

In einem Beschichtungsschritt wird eine Spule mit Folie abgewickelt, mit Elektrodenmaterial, einem sogenannten "Slurry", beschichtet und getrocknet, und dann die entstandene beschichtete Folie, auch Elektrodenbahn genannt, zu einer neuen Spule gewickelt. Diese resultierende Spule oder Coil wird an einen Kalandrier-Schritt übergeben, in welchem die beschichtete Folie zwischen die Rollen gepresst wird. Dabei kann jeder der Schritte jeweils aus einer Abfolge von Abwickeln, Verarbeiten und Aufwickeln einer Spule besteht.

In einem nachfolgenden Längsschnitt wird die Elektrodenbahn in Längsrichtung (längs) in mehrere Bahnen kleinerer Breite geschnitten. Optional kann auch ein zusätzlicher Schnitt zwischen Beschichtung und Kalandrieren erfolgen.

Die resultierenden "Tochter"-Spulen mit der beschichteten, kalandrierten und geschlitzten Elektrodenbahn werden der Zellanordnung zugeführt, wo sie in lateraler Richtung in Platten (z. B. mit 20 cm Länge) geschnitten, gestapelt und in einen Behälter gegeben werden, um sie vor Umgebungseinflüssen zu schützen. Jede Batteriezelle besteht aus einer Vielzahl von Elektrodenblättern. Während es einfach ist, eine Zelle als eigenständiges Element zu identifizieren und zu verfolgen (z. B. mit einer aufgedruckten Kennung, wie z. B. einem Barcode), ist es schwierig, den Ursprung der Elektrodenblätter auf der kontinuierlichen Elektrodenbahn über die verschiedenen Prozessschritte hinweg zu identifizieren.

Eines der in der vorliegenden Beschreibung betrachtete Themen ist also die Rückverfolgbarkeit der Elektrodenbahn auf Blechebene über alle Produktionsschritte hinweg. Stellt man sich zum Beispiel den Fall vor, in dem eine Batteriezelle bei einem End-of-Line-Test als fehlerhaft identifiziert wird. Zu wissen, aus welchen Abschnitten der Elektrodenbahn die zusammengesetzten Schichten der Zelle stammen, ist ein wichtiger Faktor für eine umfassende Ursachenanalyse und Prozessoptimierung. In den heutigen Batterieproduktionen und/oder Gigafactories erfolgt ein entsprechendes Tracking und/oder Tracing jedoch immer noch auf der Ebene der Slurry-Chargen und Coil-IDs, was nur sehr grobe Rückschlüsse auf eine bestimmte Zelle zulässt.

Für eine solche Rückverfolgung können z.B. Marker (z.B. Barcodes) zu verwendet werden, die auf die Folie gedruckt/gelasert oder auf die Folie aufgebracht werden. Allerdings können dabei unter Umständen die nachfolgenden Probleme entstehen:
- Die Marker können die Produktqualität beeinträchtigen, (2)
- es ist schwierig, eine geeignete Stelle für die Marker zu finden, da die meisten unbeschichteten Kanten der Folie in nachfolgenden Prozessschritten entfernt werden und die Positionen der verbleibenden Kerben nicht im Voraus bekannt sind. (3)
- Zusätzlich werden diese Kerben als Stromabnehmer verwendet und eine Verschmutzung der Oberfläche kann diese Hauptfunktionalität der Laschen beeinträchtigen.

Weiterhin kann für eine solche Rückverfolgung zumindest unter anderem auch das sogenannte "Visual Fingerprinting" eingesetzt werden, um Bilder von Elektrodenbahnen zu identifizieren und abzugleichen.

Eine Einschränkung solcher bekannten Ansätze ist die folgende: Es wird davon ausgegangen, dass Bilder desselben Bahnbereichs, die aus zwei separaten Prozessschritten stammen, so sich so ähnlich sind, dass sie den gleichen Fingerabdruck ergeben. Andernfalls verschlechtert sich die Genauigkeit des Abgleichs (verpasste Übereinstimmungen und Fehlalarme).

So kann beispielsweise das Auf- und Abwickeln der Spule das optische Erscheinungsbild der Oberfläche verändern. Dies kann sich insbesondere auf den Anfang der Bahn auswirken, wo der Radius der Spule klein ist, die Krümmung hoch ist und die Schichten auf der Spule Druck von den oberen Schichten erhalten. Beispielsweise kann eine Störung oder markante Struktur auf der Oberfläche einen Abdruck auf benachbarten Schichten der Spule erzeugen, was die visuelle Wiedererkennbarkeit danach verschlechtern kann.

Ein Verfahren gemäß der vorliegenden Beschreibung kann ebenfalls unter Verwendung eines visuellen Fingerabdrucks oder sonstigen Fingerabdrucks erfolgt (in diesem Fall wären die Erfassungseinrichtungen z.B. als Kameras ausgebildet und die Messdaten damit erfasste Bilder). Dabei kann z.B. ein sogenannter "Key-Point-Ansatz" und/oder ein sogenannter "Template-Matching-Ansatz" verfolgt werden. Bei einem Key-Point-Ansatz werden zunächst spezifische Key-Points detektiert (z.B. spezifische Inhomogenitäten der Grauwerte). Diese werden dann durch Merkmalsvektoren beschrieben, die schließlich verwendet werden, um passende Key-Points in Bildpaaren zu finden. Bestehende Methoden, wie ORB (oriented BRIEF), Key-Point-Detektor und Deskriptor-Extraktor oder ASLFeat können für den Key-Point-basierten Bildabgleich verwendet werden. Alternativ gibt es für den Template-Abgleich bereits Ansätze, z.B. basierend auf der Fast-Fourier-Transformation (FFT) in OpenCV. Weniger gebräuchlich, aber auch bekannt sind Ansätze, die nur den Phasenteil der FFT anpassen (ohne Berücksichtigung der Amplitude), was von Vorteil sein kann, indem man sich nur auf strukturelle Ähnlichkeiten zwischen den Bildern konzentriert und die Auswirkungen von Helligkeitsschwankungen reduziert.

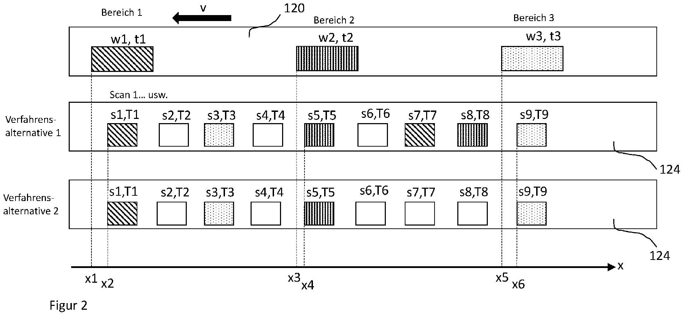

Ein Beispiel für einen visuellen Fingerabdruck auf der Grundlage des Vorlagenabgleichs ist in Figur 2 dargestellt und wird nachfolgend näher erläutert.

Ein Verfahren gemäß der vorliegenden Beschreibung kann beispielsweise eine oder mehrere der nachfolgend genannten Verbesserungen aufweisen:
- Verschmelzung von bildbasiertem Fingerprinting mit physischem Modell des Webs,
- Verwendung eines probabilistischen Modells plausibler Übereinstimmungen (basierend auf Entfernungen) zur Reduzierung falsch positiver Übereinstimmungen,
- Verwendung einer probabilistischen Modellierung von Unsicherheiten in den Entfernungen,
- Schnellere Suche durch Berücksichtigung von Monotonie-Beschränkungen.

Der visuelle Fingerabdruck, unabhängig davon, ob Vorlagenabgleich oder Schlüsselpunktdeskriptoren verwendet werden, liefert häufiger sogenannte "falsch positive" Ergebnisse. Diese sogenannten "False Positives" sind Scanfenster s der bearbeiteten Materialbahn, die fälschlicherweise mit einem falschen Fenster w der unbearbeiteten Materialbahn übereinstimmen (s. Figur 2). Gründe für Fehlalarme können Mehrdeutigkeiten der visuellen Fingerabdrücke sein, z.B. aufgrund von unvollkommenen Bildern (bzgl. Größe, Auflösung, Lichtverhältnisse, Rauschen), und die Notwendigkeit, eher niedrige Erkennungsschwellen zu verwenden, um eine ausreichende Identifizierung von Oberflächenbereichen zu erreichen.

Die falsch positiven Ergebnisse können z.B. wie folgt gefiltert werden: Jedem Fenster ist eine Längsposition (in Metern) auf der Bahn zugeordnet. Die Position kann aus einem Zeitstempel des zugehörigen Bildes und einem Meterzähler berechnet werden, wobei letzterer auch aus der über die Zeit integrierten Geschwindigkeit der bewegten Elektrodenbahn abgeleitet werden kann. Anhand der Positionen werden die Längsabstände zwischen den Fenstern berechnet.

Unplausible Übereinstimmungen sind solche, deren Entfernung nicht dem erwarteten Wert der anderen Übereinstimmungen entspricht. Die Entscheidung, welche der Übereinstimmungen plausibel sind, kann auf einer gewichteten Mehrheitsentscheidung beruhen, wobei die Gewichte aus den Konfidenzen der Übereinstimmungen abgeleitet werden (z. B. auf der Grundlage der Korrelationskoeffizienten). Alternativ kann die Entscheidung z.B. iterativ erfolgen, z.B. mit Random Sample Consensus (RANSAC), einer bekannten Technik in der Computer Vision.

In einer weiteren Version dieser Ausgestaltung können die Abstände als Wahrscheinlichkeitsdichtefunktionen dargestellt werden, was die Unsicherheit der Werte explizit beschreibt. Beispielsweise können die Zeitstempel der Kamerabilder eine Unsicherheit von 50 ms aufweisen. Bei einer Liniengeschwindigkeit von 80 m/min bedeutet dies eine Unsicherheit von fast 7 cm in der Position. Die Berechnung des Abstands zwischen zwei Positionen erhöht die Unsicherheit zusätzlich. Insbesondere, wenn wir die Wahrscheinlichkeitsdichtefunktionen zweier Positionen als Normalverteilungen mit den Varianzen σ_1^2 und σ_2^2 beschreiben, dann hat der Abstand zwischen ihnen eine Varianz von σ_1^2+σ_2^2, was bedeutet, dass sich die einzelnen Varianzen summieren. Bei einer typischen Länge einer Elektrodenplatte von z.B. 20 cm können die Unsicherheiten groß genug sein, um im physikalischen Modell relevant zu werden.

Ein weiterer (unabhängiger) Vorteil der Verschmelzung des visuellen Fingerabdrucks mit einem physikalischen Webmodell besteht darin, dass die Monotonie auf dem Web eingeschränkt wird und die resultierende Reihenfolge der Bilder verwendet werden kann, um den Abgleich zu beschleunigen. Konkret wird die Tatsache genutzt, dass die Positionen der Fenster im Web monoton ansteigen. Anstatt also jedes Scanfenster s mit allen Fenstern w abzugleichen, muss nur eine Teilmenge von Windows w berücksichtigt werden. Fenster w, bei denen bereits ein stabiler Konsens über ein passendes Scanfenster s erzielt wurde, können für alle nachfolgenden Übereinstimmungen aus dem Fenstersatz ausgeschlossen werden.

Ein Sonderfall bei derartigen Verfahren sind Bahnbrüche, bei denen die Bahn unbeabsichtigt bricht, z.B. durch unsachgemäße Zugregelung. Bei der Befestigung eines Bahnrisses wird eine bestimmte Bahnlänge entfernt und die neuen Enden werden von Hand gespleißt. Es erfolgt in der Regel keine Aufzeichnung der Länge des entfernten Abschnitts, so dass die Abstände zwischen den Fenstern beeinflusst werden können. Tritt jedoch ein Bahnriss auf, wird dieser in der Regel zumindest auf Spulenebene (z. B. aus Qualitätsüberwachungs-Gründen) aufgezeichnet/dokumentiert und seine Position kann oft aus Steuerungsdaten ungefähr geschätzt werden. Bei den Abschnitten um einen Bahnbruch kann daher die wegbezogene Optimierung vorübergehend deaktiviert werden.

Eine weitere bzw. alternative Verbesserung bekannter Verfahren kann z.B. über ein KI-basiertes Bildtransformationsmodell (Bild-Bild-Übersetzung) zur Vorhersage von Prozesseinflüssen (z.B. Wicklung, Kalandern) zur Verbesserung der Übereinstimmung der Bilder über die Produktionsschritte hinweg erfolgen.

Es wird durch die Tatsache motiviert, dass sich die Oberfläche der Elektrodenbahn durch Verfahrens- und/oder Bearbeitungsschritte verändern kann, z.B. durch Wickeln und/oder Abwickeln. Und natürlich auch durch das Kalandern kann sich die Oberfläche zum Teil erheblich verändern.

Diese Änderungen können die Übereinstimmungsgenauigkeit beeinträchtigen oder sogar den Abgleich unmöglich machen. Beispielsweise für den Kalander kann es möglich sein, das Problem zu umgehen, indem die Bilder vor dem Kalander aufgenommen werden, aber dies kann den Einbau eines zusätzlichen Sichtsystems erfordern. Die Auswirkungen beispielsweise durch ein Wickeln und/oder Abwickeln können jedoch nicht vermieden werden.

Die Grundidee ist es, ein ML-Modell gemäß der vorliegenden Beschreibung, z.B. ein tiefes neuronales Netzwerk, zu trainieren, um die Auswirkungen auf die Oberfläche vorherzusagen. Das Trainingsset kann dabei aus Paaren von Bildern vom gleichen Bereich mit und ohne den jeweiligen Effekt und einem Vektor x von zusätzlichen Kontextinformationen (z. B. Position in Teilzählern auf der Bahn, Produkttyp) bestehen. Beispiele für eine Erstellung von solchen Trainingsdaten, um die Wirkung des Wickelns und/oder Abwickelns zu modellieren, können sein: Erfassen eines Bilds, das vor dem Auf- und Abwickeln aufgenommen wird (z. B. im Beschichtungsprozess direkt nach dem Trocknen und vor dem Wickeln zur Spule) und erfassen eines weiteren Bilds des gleichen Bereichs nach dem Abwickeln. Ein weiteres Beispiel, um die Wirkung des Kalanderns zu modellieren, kann z.B. sein: Aufnehmen eines Bilds, das vor dem Kalandern aufgenommen wurde, erfassen eines weiteren Bilds des gleichen Bereichs nach dem Kalandern.

Beim Erstellen solcher Trainingssets kann es z.B. hilfreich sein, Marker (z. B. Aufkleber) zu verwenden, um eine hohe Genauigkeit der pixelweisen Korrespondenzen zwischen den erfassten Bildern vor und nach dem entsprechenden Verfahrensschritt zu erreichen. Eine weitere Erhöhung der Genauigkeit des Trainingssatzes kann erreicht werden, indem pixelweise Verschiebungen der Bilder berücksichtigt werden, um die Korrelation zwischen den erfassten Bildern vor und nach dem entsprechenden Verfahrensschritt zu vergrößern.

Basierend auf solch einem Trainingsset kann dann ein entsprechendes ML-Modell, z.B. ein tiefes neuronales Netzwerk (DNN), trainiert werden, um zwischen Bildern mit und ohne Prozess- oder Bearbeitungsschritt zu übersetzen. Dabei können beispielsweise auch schon bekannte Ansätze, wie z.B. pix2pix, verwendet werden.

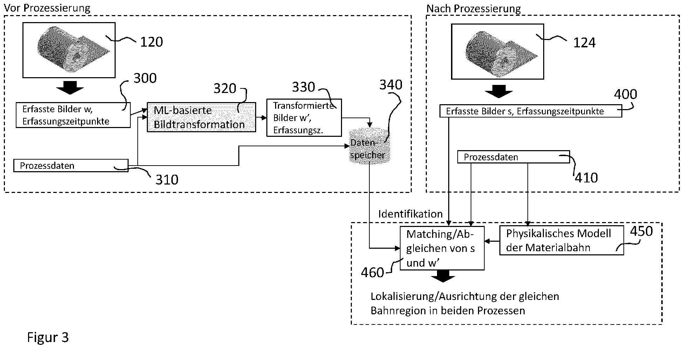

Ein solches trainierte ML-Modell kann dann beispielsweise wie nachfolgend am Beispiel von Figur 3 beschrieben eingesetzt werden. Bilder w der Materialbahn vor dem Prozessschritt werden dem Modell zugeführt, um das übersetzte Bild w' vorherzusagen, das vorhersagt, wie das ursprüngliche Bild w nach dem betrachteten Prozessschritt aussieht (z.B. nach dem Kalandern). Dann wird im oben beschriebenen Abgleich w' statt w verwendet. Das Gesamtschema ist in Figur 3 dargestellt.

Der Begriff "Bild" im Rahmen dieser Beschreibung bezieht sich in der Regel auf ein 2D-Bild, das von einer Linien- oder Bereichskamera erzeugt werden kann, die ein Grauwert- oder RGB-Bild liefert. Prinzipiell kann ein "Bild" aber auch ein hyperspektrales Kamerabild sein oder auch durch eine virtuelle Messung, z. B. eine 3D-Tomographie, erzeugt werden.

Weitere vorteilhafte Ausgestaltungen finden sich in den Unteransprüchen.

Im Folgenden wird die Erfindung beispielhaft mit Bezug auf die beigefügte Zeichnung näher erläutert.
Figur 1 zeigt ein Beispiel-System zum Nachverfolgen von Orten auf einer bewegten oder bewegbaren Materialbahn im Rahmen eines Pressens der Materialbahn;
Figur 2 zeigt einen beispielhaften Bandabschnitt der Materialbahn gemäß Figur 1 vor und nach dem Pressen mit beispielhaften Scan-Bereichen;
Figur 3 zeigt einen beispielhaften Verfahrensablauf für einen Bildabgleich vor und nach dem Pressen unter Verwendung einer ML-Transformation der Bilddaten vor dem Pressen.

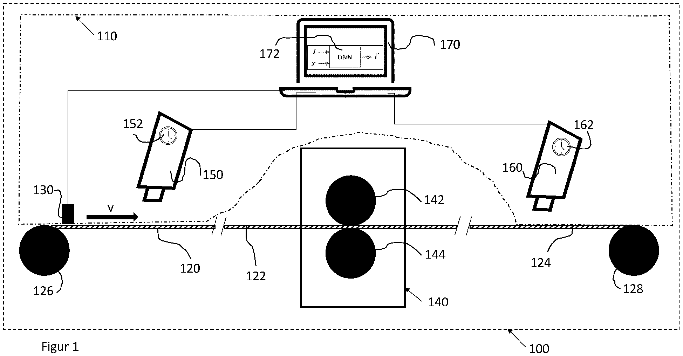

Figur 1 zeigt eine Bearbeitungsstation 140 zum Pressen einer Materialbahn 120, 122, 124. Dabei wird die Materialbahn 120, 122, 124 von einer Abwickelrolle 126 abgewickelt und mit einer konstanten Geschwindigkeit v durch die Pressstation 140 bis zu einer Aufwickelrolle 128 bewegt, wo die Materialbahn 120, 122, 124 nach dem Pressen wieder aufgewickelt wird. In der Pressstation 140 wird die Materialbahn zwischen einer oberen Pressrolle 142 und einer unteren Pressrolle 144 hindurchgeführt. Dabei sind die Pressrollen 142, 144 und die Materialbahn 120, 122, 124 derart angeordnet, ausgebildet und eingerichtet, dass dabei die Materialbahn zusammengepresst bzw. komprimiert wird. Derartige Pressschritte gibt es beispielsweise bei der Elektrodenproduktion für Batterie- oder Akku-Zellen, z.B. nach dem Aufbringen und Trocknen von Elektrodenmaterial auf eine entsprechende Trägerschicht. Im Zusammenhang mit der Batterie-Elektrodenproduktion wird ein solcher Prozessschritt z.B. "Kalandrieren" genannt.

Dabei zeigt Figur 1 nicht einen kompletten Materialbahnabschnitt von der Abwickelrolle 126 bis zur Aufwickelrolle 128, sondern drei Mal denselben Materialbahnabschnitt: einmal als erstes Bild 120 des Materialbahnabschnitts 120 unmittelbar nach dem Abwickeln von der Abwickelrolle 126, dann als zweites Bild 122 des Materialbahnabschnitts 122 im Rahmen des Pressens der Materialbahn 120, 122, 124, und dann als drittes Bild 124 des Materialbahnabschnitts 124 kurz vor dem Aufrollen der Materialbahn 120, 122, 124. Aus Gründen der einfacheren Erklärung wird dabei das jeweilige Bezugszeichen sowohl für das jeweilige Bild des Materialbahnabschnitts auf den Abbildungen als auch für den jeweiligen Materialbahnabschnitt selbst verwendet.

Weiterhin zeigt Figur 1 ein Tracking-System 110 zum Nachverfolgen der Materialbahn im Laufe von deren Prozessierung - z.B. zum ortsaufgelösten Nachverfolgen der Auswirkungen des Pressens durch die Pressstation 140 auf die Materialbahn 120, 122, 124.

Dabei umfasst das Tracking-System 110 eine erste Kamera 150 mit einer ersten Uhr 152 (kann z.B. auch als Timer, Clock oder Zähler ausgebildet und eingerichtet sein), wobei die erste Kamera 150 und die erste Uhr 152 derart ausgebildet und eingerichtet sind, dass die Uhr 152 jeweils den Erfassungszeitpunkt 300 jedes mit der ersten Kamera 150 aufgenommenen Bildes 300 erfasst und dieser dann zusammen mit zum Bild 300 gespeicherten Metadaten 300, 310 und/oder auch als dem Bild 300 zugeordnete Metadaten 300, 310 abgespeichert wird.

Das Tracking-System 110 umfasst weiterhin eine zweite Kamera 160 mit einer zweiten Uhr 162 (kann z.B. auch als Timer, Clock oder Zähler ausgebildet und eingerichtet sein), wobei die zweite Kamera 160 und die zweite Uhr 162 derart ausgebildet und eingerichtet sind, dass die Uhr 162 jeweils den Erfassungszeitpunkt 400 jedes mit der zweiten Kamera 160 aufgenommenen Bildes 400 erfasst und dieser dann zusammen mit zum Bild 400 gespeicherten Metadaten 400, 410 und/oder auch als dem Bild 400 zugeordnete Metadaten 400, 410 abgespeichert wird.

Dabei wird im Rahmen der vorliegenden Beschreibung, insbesondere der Figurenbeschreibung, davon ausgegangen, dass erfasste Bilder 300, 400 mit dem jeweils zugeordneten Erfassungszeitpunkt 300, 400 erfasst, gespeichert und/oder übertragen werden. Das wird z.B. im Folgenden nicht in jedem Fall mehr gesondert erwähnt.

Dabei umfasst das Tracking-System 110 zudem einen Computer 170, an welchen die erste Kamera 150 die von ihr aufgenommenen Bilder 300 inklusive der entsprechenden Erfassungszeitpunkte 300 überträgt. Auch die zweite Kamera 160 überträgt die von ihr erfassten Bilder 400, gemeinsam mit den entsprechenden Erfassungszeitpunkten 400, an diesen Computer 170.

Eine weitere Komponente des Trackingsystems 110 ist ein Geschwindigkeitssensor 130 zur zeitaufgelösten Erfassung der Geschwindigkeit der Materialbahn 120, 122, 124. Die Geschwindigkeitsdaten werden dann ebenfalls an den Computer 170 übertragen, wo sie als zeitaufgelöste Geschwindigkeitsdaten oder ein entsprechendes Geschwindigkeitsprofil gespeichert werden. Der Computer ist dann z.B. zur Bearbeitung und/oder Auswertung der Geschwindigkeitsdaten, wie z.B. einer Glättung, einer Mittelwert-Bildung, einer Normierung, einer Drift-Korrektur oder Ähnlichem ausgebildet und eingerichtet. Zur Vereinfachung der Erläuterungen zum in den Figuren 1 bis 3 dargestellten Verfahrensabläufe wird in der nachfolgenden Figurenbeschreibung zu den Figuren 1 bis 3 sowie den entsprechenden Verfahrensbeschreibungen von einer konstanten Bahngeschwindigkeit v der Materialbahn 120, 122, 124 ausgegangen.

Der Computer 170 ist zur Durchführung eines sogenannten Fingerprint-Verfahrens ausgebildet und eingerichtet, indem beispielsweise eine entsprechende Software auf ihm installiert ist und/oder abläuft. Dabei ist das Fingerprint-System beispielsweise derart ausgebildet und eingerichtet, dass beispielsweise vor einer Bearbeitung der Materialbahn 120, 122, 124 Bilder bestimmter Oberflächenbereiche erfasst werden und dann vermittels eines aus dem Stand der Technik bekannten Fingerprint-Verfahrens, Wiedererkennungs-Verfahrens oder Identifikations-Verfahrens diese Oberflächenbereiche vermittels von Bildvergleichen von nach der Bearbeitung aufgenommenen Bildern der Materialbahn 120, 122, 124 mit den vorher aufgenommenen Bildern wiederzuerkennen.

Dafür werden dann z.B. in bestimmten zeitlichen Abständen Bilder 300 der Materialbahn 120 vor dem Pressen durch die Bearbeitungsstation 140 zusammen mit jeweiligen Erfassungszeitpunkten 300 aufgenommen und dann an den Computer 170 gemeinsam mit den Erfassungszeitpunkten 300 übertragen. Nach der Bearbeitung der Materialbahn 122 durch die Bearbeitungsstation 140 werden dann von der zweiten Kamera 160 wiederum Bilder 400 der Materialbahn 124 aufgenommen, auch wieder gemeinsam mit entsprechenden Erfassungszeitpunkten 400, die ebenfalls dann wieder auf den Computer 170 übertragen werden.

Der Computer 170 vergleicht dann die von der zweiten Kamera erfassten Bilder 400 mit den von der ersten Kamera aufgenommenen Bildern 300 und versucht über ein Fingerprint-Verfahren, wie es beispielsweise aus dem Stand der Technik bekannt ist, zu den von der ersten Kamera 150 aufgenommenen Bildern 300 unter den von der zweiten Kamera 160 aufgenommenen Bildern 400 das jeweils Passende zu identifizieren. Auf diese Weise können dieselben Oberflächenbereiche bzw. Stellen auf der Materialbahn 120, 122, 124 vor und nach der Bearbeitung identifiziert werden und/oder verglichen werden, und damit zumindest unter anderem die Wirkung der Bearbeitung auf die jeweiligen Oberflächenbereiche nachverfolgt werden.

Weiterhin kann durch die Aufnahme der Bilder 300 der Materialbahn 120 mit der ersten Kamera 150 vor der Bearbeitung beispielsweise ein Längenmaßstab der Materialbahn 120, 122, 124 definiert werden. Dabei kann beispielsweise derart vorgegangen werden, dass ein Oberflächenbereich w1, der dem ersten Bild w1, welches von der ersten Kamera 150 unmittelbar nach dem Abwickeln der Materialbahn 120 von der Abwickelrolle 126 zu einem ersten Zeitpunkt aufgenommen wurde, zugeordnet ist, einen Nullpunkt eines solchen Materialbahn-Längenmaßstabs bildet. Aus einer bekannten Transportgeschwindigkeit der Bahn und den jeweiligen Erfassungszeitpunkten der Bilder w1, w2 durch die erste Kamera 150 kann dann jeweils der Abstand der diesen Bildern w1, w2 zugeordneten Oberflächenbereiche w1, w2 voneinander bestimmt werden. Auf diese Weise kann jedem der entsprechenden Oberflächenbereichen w1, w2 eine räumliche Längskoordinate auf der Materialbahn zugewiesen werden - und so damit ein Längenmaßstab, insbesondere ein virtueller Längenmaßstab, auf der Materialbahn 120, 122, 124 definiert werden.

Auf dieselbe Weise stellt, nach Identifizieren des ersten, von der zweiten Kamera 160 aufgenommenen Bildes s1, der diesem Bild s1 zugeordnete Oberflächenbereich s1 wiederum den oben definierten Nullpunkt der Materialbahn dar - dieser wurde auf dieses Weise quasi "wiedergefunden" oder "erneut identifiziert". Durch entsprechendes Wiedererkennen der weiteren Oberflächenbereiche s5, s9 vermittels eines Wiedererkennens der von der ersten Kamera 150 aufgenommenen Bilder w1, w2 unter den von der zweiten Kamera 160 aufgenommenen Bildern s1 - s9, kann dann jeweils wieder anhand der bekannten Transportgeschwindigkeit der Materialbahn 120, 122, 124 und den entsprechenden Aufnahmezeitpunkt 400 der zweiten Bilder 400 der genannte (virtuelle) Längenmaßstab auf der Materialbahn 120, 122, 124 nach der Bearbeitung durch die Bearbeitungsstation 140 reproduziert werden.

Auf diese Weise kann beispielsweise jedem jeweils einer Aufnahme der ersten Kamera 150 und/oder der zweiten Kamera 160 zugeordnete Oberflächenbereich w1, w2, w3, s1, s5, s9 eine entsprechende Längskoordinate auf der Materialbahn 120, 122, 124 zugewiesen werden. Zumindest unter anderem damit kann dann unmittelbar ortsaufgelöst die Wirkung der Bearbeitung durch die Bearbeitungsstation 140 auf die Materialbahn 120, 122, 124 nachverfolgt werden.

Diese einem bestimmten Oberflächenbereich w1, w2, w3, s1, s5, s9 zugeordnete Längskoordinate kann dem Oberflächenbereich auch über die gesamte vorhergehende und nachfolgende Prozesskette bis zur Herstellung eines oder mehrerer Endprodukte zugeordnet bleiben. Damit kann z.B. beim Auftreten eines Fehlers oder einer Störung eines bestimmten unter Verwendung der Materialbahn hergestellten Produkts nachvollzogen werden, welche Längskoordinaten bzw. Längskoordinatenbereiche der Materialbahn im Produkt verwendet wurden und dann anhand gespeicherter Prozessdaten und -bilder nachvollzogen werden, was mögliche Ursachen für den Fehler bzw. die Störung sein könnten.

Ein gemäß der vorstehend genannten Beschreibung bekannter räumlicher Abstand eines ersten Oberflächenbereiche w1, von einem zweiten, nachfolgenden Oberflächenbereich w2, kann bei der Wiedererkennung des zweiten Oberflächenbereichs w2 nach erfolgreicher Identifizierung des ersten Oberflächenbereichs w1 genutzt werden. Dies kann beispielsweise derart ausgebildet und eingerichtet sein, dass nach Wiedererkennung des ersten Bildes w1 bzw. Oberflächenbereichs w1 unter den von der zweiten Kamera 160 aufgenommenen Bildern s1 - s9 für eine Erkennung des zweiten Oberflächenbereichs w2 dasjenige Bilder s5 von der bearbeiteten Materialbahn 124 bevorzugt wird, welches in einem zeitlichen Abstand vom von der zweiten Kamera 160 aufgenommenen Bild w1 des ersten Oberflächenbereichs w1 liegt, der sich aus dem vorstehend genannten, bekannten Abstand der zugeordneten Oberflächenbereiche sowie der Transportgeschwindigkeit der Materialbahn ergibt.

Ergeben sich beispielsweise beim Vergleich von von der zweiten Kamera 160 aufgenommenen Bildern s1 - s9 mit dem zweiten der von der ersten Kamera aufgenommenen Bilder w2 des zweiten Oberflächenbereichs w2 verschiedene Bilder s4, s5, s6, die eine gewisse Ähnlichkeit mit dem von der ersten Kamera 150 aufgenommenen zweiten Bild w2 haben, so wird im Rahmen des Verfahrens dann dasjenige der Bilder s5 ausgewählt, bei welchem der Abstand des zugehörigen Oberflächenbereichs s5 zum bereits identifizierten ersten Oberflächenbereich s1 dem erwarteten Abstand am nächsten kommt.

Hierbei kann weiterhin beispielsweise eine Messunsicherheit bei der Messung der Zeiten sowie der Bahngeschwindigkeiten eingerechnet werden. Dies kann verfahrenstechnisch beispielsweise derart berücksichtigt werden, dass im vorstehend genannten Fall eine Abstands-Wahrscheinlichkeitsverteilung aus dem bekannten Abstand des ersten w1 und zweiten Oberflächenbereichs w2 sowie Messunsicherheiten bei der Bilderfassung und Geschwindigkeitsmessung der Materialbahn ermittelt wird. Eine solche Wahrscheinlichkeitsverteilung kann z.B. als eine Gauss'sche oder ähnliche Wahrscheinlichkeitsverteilung ausgebildet und einrichtet sein bzw. durch eine solche Wahrscheinlichkeitsverteilung angenähert werden. Diese Wahrscheinlichkeitsverteilung kann dann beispielsweise gemeinsam mit Ähnlichkeitswerten, welche sich jeweils aus Vergleichen von von der zweiten Kamera 160 aufgenommenen Bildern s1 - s9 mit dem von der ersten Kamera 150 aufgenommenen zweiten Bild w2 des zweiten Oberflächenbereichs w2 gemäß aus dem Stand der Technik bekannten Fingerprint-Verfahren ergeben, zur Auswahl des dem zweiten Oberflächenbereich w2 entsprechenden Bilds s5 von der zweiten Kamera 160 herangezogen werden.

Dabei werden die vorstehend eingeführten Bezugszeichen w1, w2 sowie s1 - s9 im Rahmen der Beschreibung zu Figur 2 näher erläutert.

Zur Durchführung einer vorteilhaften Ausgestaltung des vorstehend bereits beschriebenen Fingerprint-Verfahrens zur Identifizierung von Oberflächenbereichen w1 nach einer Bearbeitung der Materialbahn 120, 122, 124 in der Bearbeitungsstation 140, umfasst der Computer 170 ein neuronales Netz 172. Dabei ist das neuronale Netz 170 derart ausgebildet, eingerichtet und trainiert, dass es eine Auswirkung des Bearbeitens der Materialbahn 122 in der Bearbeitungsstation 140 auf von erste Kamera 150 erfasste Bilder w1, w2, w3 der unbearbeiteten Materialbahn 120 simuliert.

Dafür wurde das neuronale Netz 172 mit Bildpaaren, bestehend jeweils aus einem von der ersten Kamera 150 aufgenommenen Bild eines Oberflächenbereichs vor dem Pressen und einem von der zweiten Kamera 160 aufgenommenen Bild des gleichen Oberflächenbereichs nach dem Pressen, trainiert. Dabei ist das neuronale Netz 172 als ein aus dem Stand bekanntes tiefes neuronales Netz ("Deep Neural Network" (DNN)) ausgebildet und eingerichtet. Das Training des neuronalen Netzes 172 erfolgte nach aus dem Stand der Technik bekannten Verfahren des überwachten Lernens für derartige Deep Neural Networks (DNN). Aber auch andere Neuronale Netze oder auch ML-Modelle gemäß dem Stand der Technik oder der vorliegenden Beschreibung können zu diesem Zweck trainiert und verwendet werden.

Das so ausgebildete verbesserte Verfahren läuft dann derart ab, dass von der ersten Kamera 150 aufgenommene Bilder 300 von Oberflächenbereichen w1, w2, w3 in das neuronale Netz 172 eingegeben werden. Vom neuronalen Netz 172 wird dann ein modifiziertes Bild 330 erzeugt, welches dann zum Vergleich mit von der zweiten Kamera 160 aufgenommenen Bildern der Materialbahn 124 nach dem Pressen in der Bearbeitungsstation 140 verwendet wird.

Diese Verbesserung des Verfahrens erhöht die Erkennungswahrscheinlichkeit von durch die Bearbeitungsstation bearbeiteten Oberflächenbereichen der Materialbahn 120, 122, 124, indem mögliche Veränderungen der Oberfläche der Materialbahn 120, 122, 124 durch die Bearbeitung bereits, zumindest teilweise, in den durch das neuronale Netz 172 bearbeiteten Bildern 300 der ersten Kamera 150 simuliert und/oder einbezogen wurden. Solche auf diese Weise erzeugte Bilder 330 sind dann den von der zweiten Kamera aufgenommenen Bildern 400 der jeweils entsprechenden Oberflächenbereiche unter Umständen ähnlicher und daher durch entsprechende Fingerprint-Verfahren besser erkennbar.

Auf diese Verbesserung-Option des Fingerprint-Verfahrens wird im Zusammenhang mit Figur 3 nachfolgend noch näher eingegangen.

Figur 2 zeigt im oberen Bereich den Materialbahnabschnitt 120 nach dem Abwickeln von der in Figur 1 dargestellten Abwickelrolle 126.

Dabei bezeichnen die Bezugszeichen für die Bereiche w1, w2 und w3 des Materialbahnabschnitts 120 vor der Bearbeitung jeweils sowohl die entsprechenden Oberflächenbereiche w1, w2, w3 als auch z.B. von der in Figur 1 dargestellten ersten Kamera 150 erfasste Bilder w1, w2, w3 dieser Oberflächenbereiche w1, w2, w3. Die Bezugszeichen t1, t2 und t3 bezeichnen die jeweiligen Erfassungszeitpunkte t1, t2 und t3 der zugehörigen Bilder w1, w2, w3, z.B. mit der ersten Kamera 150.

Weiterhin zeigt Figur 2 im mittleren und unteren Bereich jeweils den gleichen Materialbahnabschnitt 124 wie oben, aber diesmal nach der Bearbeitung des Materialbahnabschnitts 122 bzw. unmittelbar vor dem Aufwickeln auf die in Figur 1 gezeigte Aufwickelrolle 128.

In Figur 2 ist durch einen Pfeil v eine Bewegung der in Figur 2 dargestellten Materialbahnabschnitte 120, 124 in Pfeilrichtung mit einer Geschwindigkeit v symbolisiert. Bei einer in Bezug zu Figur 2 feststehenden Kamera würden die Materialbahnabschnitte 120, 124 also in Richtung des dargestellten Pfeils unter einer solchen Kamera hindurchbewegt.

Dabei bezeichnen auch hier die Bezugszeichen für die Bereiche s1, s2, s3, s4, s5, s6, s7, s8 und s9 (in dieser Beschreibung auch als s1 - s9 abgekürzt) des Materialbahnabschnitts 124 nach der Bearbeitung jeweils sowohl die entsprechenden Oberflächenbereiche s1, s2, s3, s4, s5, s6, s7, s8, s9 (abgekürzt s1 - s9) als auch von der in Figur 1 dargestellten zweiten Kamera 160 erfasste Bilder s1, s2, s3, s4, s5, s6, s7, s8, s9 (s1 - s9) dieser Oberflächenbereiche s1, s2, s3, s4, s5, s6, s7, s8, s9 (s1 - s9). Die Bezugszeichen T1, T2, T3, T4, T5, T6, T7, T8, T9 (T1 - T9) bezeichnen die jeweiligen Erfassungszeitpunkte T1, T2, T3, T4, T5, T6, T7, T8 und T9 (T1 - T9) der zugehörigen Bilder s1, s2, s3, s4, s5, s6, s7, s8 und s9 (s1 - s9) mit der zweiten Kamera 160.

Der obere Bereich in Figur 2 zeigt einen Bereich der in Figur 1 bereits dargestellten Materialbahn 120 unmittelbar nach dem Abwickeln von der Abwickelrolle 130 und vor dem Prozessieren in der Bearbeitungsstation 140. Dabei ist auf der Materialbahn 120 ein erster Oberflächenbereich w1 links, ein zweiter Oberflächenbereich w2 mittig und ein dritter Oberflächenbereich w3 rechts auf der Materialbahn 120 dargestellt.

In Figur 2 sind den jeweiligen Oberflächenbereichen w1, w2, w3 der unbearbeiteten Materialbahn 120 charakteristische Schraffuren zugeordnet, welche sowohl für ein spezifisches Aussehen des jeweiligen Oberflächenbereichs w1, w2, w3 als auch für die davon erfassten Bilder w1, w2, w3 charakteristisch sind.

Ganz unten und Figur 2 ist ein Längenmaßstab dargestellt, welcher eine Längskoordinate von Bereichen der Materialbahn 120, 124 entlang der Materialbahn darstellt. Anhand dieses Längsmaßstabs zeigt Figur 2, dass der erste Oberflächenbereich w1 eine Anfangskoordinate x1, der zweite Oberflächenbereich w2 eine Anfangskoordinate x3 und der dritte Oberflächenbereich w3 eine Längskoordinate x5 entlang des Materialbahnabschnitts 120, 124 hat.

Es wird nun vor der Prozessierung des Materialbahnabschnitts 120 in der Bearbeitungsstation 140 vom ersten Oberflächenbereich w1 zu einem Zeitpunkt t1 von der in Figur 1 dargestellten ersten Kamera 150 ein Bild w1 des ersten Oberflächenbereichs w1 erfasst. Zu einem Zeitpunkt t2 wird auf die gleiche Weise zum Zeitpunkt t2 ein Bild w2 des zweiten Oberflächenbereichs w2 erfasst. In gleicher Weise wird vom dritten Oberflächenbereich w3 zu einem Zeitpunkt t3 von der ersten Kamera 150 ein Bild w3 des dritten Oberflächenbereichs w3 erfasst.

Der Abstand des ersten Oberflächenbereichs w1 vom zweiten Oberflächenbereich w2 kann dann beispielsweise aus einer Differenz des Erfassungszeitpunkts t2 des Bilds w2 des zweiten Oberflächenbereichs w2 und des Erfassungszeitpunkts t1 des Bilds w1 des ersten Oberflächenbereichs w1 sowie der Transportgeschwindigkeit v des Materialbahnabschnitts 120 berechnet werden. Auf diese Weise kann aus einer bekannten Ortskoordinate x1 für den ersten Oberflächenbereich w1 die Anfangskoordinaten x3 des zweiten Oberflächenbereichs w2 berechnet werden. Analog zur vorstehend dargestellten Vorgehensweise kann dann auch die Anfangskoordinaten x5 des dritten Oberflächenbereichs w3 aus dem Erfassungszeitpunkt t3 des Bildes w3 des dritten Oberflächenbereichs w3 und dem Erfassungszeitpunkt t2 des Bildes w2 des vorhergehenden Oberflächenbereichs w2 sowie der Transportgeschwindigkeit v des Materialbahn Abschnitts 120 ermittelt werden.

Zur Vereinfachung der nachfolgenden Erklärung wird angenommen, dass im Rahmen der gesamten Erläuterungen eines Verfahrens gemäß der vorliegenden Beschreibung die Materialbahn mit einer konstanten Geschwindigkeit v bewegt wird.

Daraus ergibt sich, dass nach der vorstehend erläuterten Bilderfassung vor der Prozessierung der Materialbahn 120 durch die Bearbeitungsstation 140 bekannt ist, nach welcher Zeit t2-t1 die Erfassung des Bildes w2 des zweiten Oberflächenbereichs w2 nach der Erfassung des Bildes w1 des ersten Oberflächenbereichs w1 erfolgte. Auch der Abstand x3-x1 des zweiten Oberflächenbereichs w2 vom ersten Oberflächenbereich w1 ist daher bekannt. Weiterhin ist ebenfalls bekannt, nach welcher Zeit t3-t2 die Erfassung des Bildes w3 des dritten Oberflächenbereichs w3 nach der Erfassung des Bildes w2 des zweiten Oberflächenbereichs w2 erfolgt. Auch hier ist der Abstand x5-x3 des dritten Oberflächenbereichs w3 vom zweiten Oberflächenbereich w2 ebenfalls bekannt.

Anhand des im mittleren Bereich von Figur 2 dargestellten Materialbahnabschnitts 124 nach seiner Bearbeitung, wird nachfolgend eine erste Variante eines Tracking-Verfahrens zum Identifizieren bzw. Wiedererkennen der vorstehend erläuterten Oberflächenbereiche w1, w2, w3 auf dem in der Bearbeitungsstation 140 prozessierten Materialbahnabschnitt 124 beschrieben.

Dabei werden von der in Bezug auf Figur 1 genannten zweiten Kamera 160 zeitlich nacheinander Bilder s1 - s9 von jeweils zugeordneten Oberflächenbereichen s1 - s9 auf dem bearbeiteten Materialbahnabschnitt 124 mit entsprechenden Aufnahmezeitpunkten T1 - T9 aufgenommen.

Ganz allgemein werden dann nachfolgend unter Verwendung eines Fingerprint-Verfahrens gemäß dem Stand der Technik die Bilder s1 - s9 vom bearbeiteten Materialbahnabschnitt 124 mit den Bildern w1, w2, w3 vom unbearbeiteten Materialbahnabschnitt 120 verglichen. Die zweite Kamera 160 nimmt Bilder mit einem anderen Bildformat auf als die erste Kamera 150. Daher haben in der Darstellung in Figur 2 die von ihr aufgenommenen Bilder s1 - s9 ein anderes Bildformat als die von der ersten Kamera 150 aufgenommenen Bilder w1, w2, w3.

Die Ergebnisse dieser Vergleiche sind in Figur 2 durch entsprechende Schraffuren der jeweiligen Bilder s1 - s9 der bearbeiteten Materialbahn 124 symbolisiert. So zeigt zum Beispiel eine übereinstimmende Schraffur des ersten s1 und siebten Oberflächenbereichs s7 der bearbeiteten Materialbahn 124 bzw. des ersten s1 und siebten Bildes s7 dieser Oberflächenbereiche s1, s7, dass beide Bilder s1, s7 eine Ähnlichkeit mit dem Bild w1 des ersten Oberflächenbereichs w1 der unbearbeiteten Materialbahn 120 aufweisen. Gleiches gilt für eine Ähnlichkeit des fünften s5 und achten Bildes s8 von der bearbeiteten Materialbahn 124 zum Bild w2 des zweiten Oberflächenbereichs w2 der unbearbeiteten Materialbahn 120, und auch für eine Ähnlichkeit des dritten s3 und neunten Bildes s9 von der bearbeiteten Materialbahn 124 zum Bild w3 des dritten Oberflächenbereichs w3 der unbearbeiteten Materialbahn w3. Bei Oberflächenbereichen s2, s4, s6 auf der bearbeiteten Materialbahn 124, die in Figur 2 keine Schraffur aufweisen, wurde keine Ähnlichkeit mit den zum Vergleich herangezogenen Bildern w1, w2, w3 von der unbearbeiteten Materialbahn 120 festgestellt.

Dazu werden dann in einem ersten Schritt vermittels eines Fingerprint-Verfahren gemäß dem Stand der Technik nun die Bilder s1 - s9 von der bearbeiteten Materialbahn 124 mit dem Bild w1 des ersten Oberflächenbereichs w1 der unbearbeiteten Materialbahn 120 verglichen. Dabei wird eine Ähnlichkeit des Bilds w1 des ersten Oberflächenbereichs w1 der unbearbeiteten Materialbahn 120 mit dem zum Zeitpunkt T1 erfassten Bildes s1 sowie mit dem zum Zeitpunkt T7 erfassten Bildes s7 der bearbeiteten Materialbahn 124 festgestellt. Weiterhin ist bekannt, welchen Abstand der erste Oberflächenbereich w1 auf der unbearbeiteten Materialbahn 120 von vorhergehenden, nicht in Figur 2 dargestellten Oberflächenbereichen hat. Durch einen Vergleich der Erfassungszeitpunkte T1 und T7 mit diesem bekannten Abstand, unter Berücksichtigung der Transportgeschwindigkeit v, kann nur der durch das erste Bild s1 erfasste Oberflächenbereich s1 der bearbeiteten Materialbahn 124 dem ersten Oberflächenbereich w1 der unbearbeiteten Materialbahn 120 entsprechen. Aus dem zugehörigen Erfassungszeitpunkt T1, einem Erfassungszeitpunkt des nicht in Figur 2 dargestellten vorhergehenden Bildes und der Transportgeschwindigkeit v der Materialbahn 120, 122, 124 kann nun eine Ortskoordinate x2 des dem ersten Oberflächenbereich w1 auf der unbearbeiteten Materialbahn entsprechenden Oberflächenbereichs s1 auf der bearbeiteten Materialbahn 124 ermittelt werden.

In einem zweiten Schritt werden nun die Bilder s1 - s9 von der bearbeiteten Materialbahn 124 mit dem Bild w2 des zweiten Oberflächenbereichs w2 der unbearbeiteten Materialbahn 120 verglichen. Dabei wird eine Ähnlichkeit des Bild w2 des zweiten Oberflächenbereichs w2 der unbearbeiteten Materialbahn 120 mit dem zum Zeitpunkt T5 erfassten Bild s5 sowie mit dem zum Zeitpunkt T8 erfassten Bild s8 auf der bearbeiteten Materialbahn 124 festgestellt. Weiterhin ist bekannt, welchen Abstand der zweite Oberflächenbereich w2 auf der unbearbeiteten Materialbahn 120 vom vorhergehenden ersten Oberflächenbereich w1 hat. Durch einen Vergleich der Erfassungszeitpunkte T5 und T7 mit diesem bekannten Abstand, unter Berücksichtigung der Transportgeschwindigkeit v, kann nur der durch das fünfte Bild s5 erfasste Oberflächenbereich s5 der bearbeiteten Materialbahn 124 dem zweiten Oberflächenbereich w2 der unbearbeiteten Materialbahn 120 entsprechen. Aus dem zugehörigen Erfassungszeitpunkt T5, dem Erfassungszeitpunkt T1 des Bildes s1 und der Transportgeschwindigkeit v der Materialbahn 120, 122, 124 kann nun eine Ortskoordinate x4 des dem zweiten Oberflächenbereich w2 auf der unbearbeiteten Materialbahn 120 entsprechenden Oberflächenbereichs s5 auf der bearbeiteten Materialbahn 124 ermittelt werden.

Auf analoge Weise wird dann auch ermittelt, dass der durch das neunte Bild s9 erfasste Oberflächenbereich s9 der bearbeiteten Materialbahn 124 dem dritten Oberflächenbereich w3 der unbearbeiteten Materialbahn 120 entspricht. Auf die o.g. Weise wird dann ebenfalls eine Ortskoordinate x6 des dem dritten Oberflächenbereich w3 auf der unbearbeiteten Materialbahn 120 entsprechenden Oberflächenbereichs s9 auf der bearbeiteten Materialbahn 124 ermittelt.

Anhand des im unteren Bereich von Figur 2 dargestellten Materialbahnabschnitts 124 nach dem Pressen wird nachfolgend eine weitere Variante des vorstehend erläuterten Tracking-Verfahrens zum Identifizieren bzw. Wiedererkennen der vorstehend erläuterten Oberflächenbereiche w1, w2, w3 auf dem Materialbahnabschnitt 124 nach dem Pressen in der Bearbeitungsstation 140 beschrieben.

Im Unterschied zum vorstehend genannten Verfahren werden dabei die Bilder s1 - s9 von der bearbeiteten Materialbahn 124 nur mit denjenigen der von der unbearbeiteten Materialbahn 120 aufgenommenen Bildern w1, w2, w3 verglichen, die durch vorausgehende Vergleichsschritte noch nicht identifiziert wurden.

Dies ist in Figur 2 derart dargestellt, einige der im unteren Bereich von Figur 2 dargestellten Oberflächenbereiche s1 - s9 bzw. Bilder der Oberflächenbereiche s1 - s9 im Vergleich zum im mittleren Bereich von Figur 2 dargestellten Beispiel keine Schraffuren mehr aufweisen. Grund dafür ist, dass eben die dieser Schraffur entsprechenden Bilder w1, w2, w3 der bereits identifizierten Oberflächenbereiche w1, w2, w3 der unbearbeiteten Materialbahn 120 nicht mehr zum Vergleich mit den Bildern s1 - s9 der bearbeiteten Materialbahn 124 herangezogen wurden.

So werden zur Untersuchung des zweiten bis neunten Bildes s2 - s9 der bearbeiteten Materialbahn 124 beispielsweise nur noch die Bilder w2, w3 des zweiten und dritten Oberflächenbereichs w2, w3 der unbearbeiteten Materialbahn 120 verwendet. Grund dafür ist, dass der erste Oberflächenbereich w1 der unbearbeiteten Materialbahn 120 ja auf der bearbeiteten Materialbahn bereits erkannt bzw. identifiziert wurde und die entsprechende Struktur daher bei den nachfolgenden Bildern s2 - s9 der bearbeiteten Materialbahn nicht mehr vorkommen kann.

Und zur Untersuchung des sechsten bis neunten Bildes s6 - s9 der bearbeiteten Materialbahn 124 wird beispielsweise nur noch das Bild w3 des dritten Oberflächenbereichs w3 der unbearbeiteten Materialbahn 120 verwendet. Denn der erste und zweite Oberflächenbereich w1, w2 der unbearbeiteten Materialbahn 120 wurden ja bereits erkannt bzw. identifiziert und die entsprechenden Strukturen können bei den nachfolgenden Bildern s6 - s9 nicht mehr auftreten.

In Figur 2 kann dies beispielsweise daran erkannt werden, dass das siebte und achte Bild s7, s8 im unteren Bereich von Figur 2 keine Schraffur mehr aufweist, während die entsprechenden Bilder s7, s8 im mittleren Bereich von Figur 2 noch Schraffuren aufweisen. Grund dafür ist, dass beim Untersuchen des siebten und achten Bilds s7, s8 bereits der erste und zweite Oberflächenbereich w1, w2 der unbearbeiteten Materialbahn identifiziert wurden. Daher wurde zur Untersuchung der Oberflächenbereiche s6 - s9 danach nur noch das Bild w3 des dritten Oberflächenbereichs w3 der unbearbeiteten Materialbahn 120 herangezogen. Und mit diesem konnten bei der Untersuchung beispielsweise des o.g. siebten und achten Bildes s7, s8 der bearbeiteten Materialbahn 124 eben keine Ähnlichkeiten mehr festgestellt werden.

Figur 3 zeigt ein Beispiel für einen Verfahrensablauf bzw. eine Verfahrensstruktur für eine vorteilhafte weitere Ausgestaltung des vorstehend genannten Identifikationsverfahrens.

Dabei wird das bereits in Bezug auf Figur 1 dargestellte, im Computer 170 implementierte, neuronale Netz 172 verwendet, um einen Einfluss der Bearbeitung der Materialbahn 120, 122, 124 auf von den Oberflächenbereichen w1, w2, w3 der unbearbeiteten Materialbahn 120 aufgenommene Bilder w1, w2, w3 zu berücksichtigen, anzunähern bzw. zu simulieren - oder zumindest teilweise zu simulieren bzw. anzunähern.

Wie vorstehend bereits erläutert, wurde das neuronale Netz 172 dafür mit Bildpaaren, bestehend jeweils aus einem von der ersten Kamera 150 aufgenommenen Bild eines bestimmten Oberflächenbereichs vor dem Pressen und einem von der zweiten Kamera 160 aufgenommenen Bild des gleichen Oberflächenbereichs nach dem Pressen, unter Verwendung eines aus dem Stand der Technik bekannten Trainingsverfahrens zum überwachten Lernen trainiert. Weiterhin ist das neuronale Netz 172 als "Deep Neural Network" (DNN) ausgebildet und eingerichtet.

In der genannten vorteilhaften Ausgestaltung kann das neuronale Netz 172, und beispielsweise auch jedes ML-Modell 172 gemäß der vorliegenden Beschreibung, zusätzlich derart ausgebildet und eingerichtet sein, dass die vorstehend genannten Bildpaare jeweils unter Verwendung verschiedener Prozessbedingungen, wie beispielsweise Prozessparameter, Meßpositionen, Materialbahn-Geschwindigkeiten, Temperaturen, und/oder auch Produkteigenschaften erstellt wurden. Weiterhin können die vorstehend genannten Prozessbedingungen, oder Teile davon, ebenfalls Teil der Trainingsdaten sein bzw. gewesen sein. Dabei kann das neuronale Netz 172 bzw. jedes ML-Modell 172 gemäß der vorliegenden Beschreibung, dann weiterhin derart ausgebildet und eingerichtet sein, dass als Eingangsdaten in das neuronale Netz 172, bzw. ML-Modell 172, neben entsprechenden Bilddaten auch Prozessbedingungen gemäß der vorliegenden Beschreibung bezüglich des Bearbeitungsschritts der Materialbahn verwendet werden.

Im linken Bereich von Figur 3 ist ein optionaler erweiterter Verfahrensablauf im Rahmen der Bilderfassung von der unbearbeiteten Materialbahn 120, wie sie beispielsweise im Zusammenhang mit den Figuren 1 und/oder 2 erläutert wurde, dargestellt. Der hier dargestellte Verfahrensablauf ist ein Beispiel für eine mögliche erweiterte Ausgestaltung von Verfahrensschritten a. und/oder b. gemäß der vorliegenden Beschreibung. Dabei werden von der unbearbeiteten Materialbahn 120 in einem ersten Verfahrensschritt 300 ein oder mehrere Bilder w erfasst, zusammen mit Erfassungszeitpunkten der jeweiligen Bilder w. Parallel dazu, und/oder auch danach oder davor, werden in einem weiteren Verfahrensschritt 310 Prozessdaten ermittelt, wie beispielsweise Prozessdaten bezüglich des Bearbeitungsschritts, eine Position einer Kamera, eines Oberflächenbereichs oder ähnlichen Positionen, eine Materialbahngeschwindigkeit und/oder auch eine Produktkennung.

Unter Verwendung des vorstehend bereits genannten neuronalen Netzes 172 wird dann in einem nächsten Verfahrensschritt 320 eine Bildtransformation der im ersten Verfahrensschritt 300 erfassten Bilder w unter Verwendung des neuronalen Netzes 172 durchgeführt. Dabei gehen sowohl die Bilddaten der erfassten Bilder w als auch zumindest optional die genannten Prozessdaten, und unter Umständen auch die Erfassungszeitpunkte, als Eingangsdaten in das neuronale Netz 172 ein.

Als Ausgangsdaten des neuronalen Netzes 172 erhält man dann transformierte Bilder w', welche eine Wirkung des Prozessschritts auf die von der unbearbeiteten Materialbahn 120 erfassten Bilder w simuliert. Diese transformierten Bilder w' werden gemeinsam mit den zugehörigen Erfassungszeitpunkten und ggf. auch den genannten Prozessbedingungen dann in einer Datenspeichereinrichtung 340, beispielsweise dem Computer 170, einem anderen Computer, oder auch einer entsprechenden Speichereinrichtung 340, gespeichert.

Der rechte Bereich von Figur 3 zeigt einen weiteren Datenerfassungsschritt nach der Bearbeitung der Materialbahn 124 durch die Bearbeitungsstation 140 gemäß Figur 1. Der hier dargestellte Verfahrensablauf ist ein Ausgestaltungs-Beispiel für z.B. Teile der Verfahrensschritte d. und/oder e. gemäß der vorliegenden Beschreibung. Dabei werden wiederum von der bearbeiteten Materialbahn 124 mit der in Figur 1 dargestellten zweiten Kamera 160 Bilder s und zugehörige Erfassungszeitpunkte in einem Verfahrensschritt 400 erfasst. Weiterhin werden wiederum in einem Verfahrensschritt 410 entsprechende Prozessdaten der Bearbeitung durch die Bearbeitungsstation erfasst und/oder gespeichert. Auch diese Bilder und Erfassungszeitpunkte können dann wieder in einer entsprechenden Speichereinrichtung gespeichert werden bzw. sein (nicht in Figur 3 dargestellt).

In einem unten in Figur 3 dargestellten weiteren Verfahrensschritt 460 werden dann die im Datenspeicher 340 gespeicherten transformierten Bilder w' von der unbearbeiteten Materialbahn 120, mit den von der bearbeiteten Materialbahn 124 erfassten Bildern s verglichen. Dieser Vergleich kann beispielsweise durch ein Fingerprinting- oder ähnliches bekanntes Identifikationsverfahren erfolgen, wie es z.B. auch in der vorstehend liegenden Beschreibung erläutert wurde. Der diesem Zusammenhang dargestellte Verfahrensablauf ist ebenfalls ein Ausgestaltungs-Beispiel für z.B. Teile der Verfahrensschritte d. und/oder e. gemäß der vorliegenden Beschreibung.

Weiterhin wird in einem Verfahrensschritt 450 auch ein physikalisches Modell der Materialbahn zur Identifikation der von der unbearbeiteten Materialbahn 120 aufgenommenen und transformierten Bilder w' durch die von der bearbeiteten Materialbahn 124 erfassten Bilder es herangezogen. Dabei werden beispielsweise bekannte Orte und Abstände von auf der unbearbeiteten Materialbahn 120 erfassten Oberflächenbereichen herangezogen, um diese Oberflächenbereiche auf der bearbeiteten Materialbahn 124 besser identifizieren zu können. Auch dieses Verfahren kann beispielsweise gemäß der vorliegenden Beschreibung ausgebildet und eingerichtet sein.

Als Ergebnis dieses Matchings bzw. Abgleichs gemäß Verfahrensschritt 460 unter Berücksichtigung des physikalischen Modells 450 ist dann eine Lokalisierung von auf der unbearbeiteten Materialbahn 120 aufgenommenen Oberbefehl Flächenbereichen auf der bearbeiteten Materialbahn 124. Auch diese Lokalisierung kann beispielsweise gemäß der vorliegenden Beschreibung ausgebildet und eingerichtet sein.

Dieser Matching- oder Abgleichsschritt kann beispielsweise ein Beispiel für Teile eines Verfahrensschritt d. und/oder e. gemäß der vorliegenden Beschreibung sein.

## Patentansprüche

1. Verfahren zum Nachverfolgen von Orten (w1, w2, w3) auf einer Materialbahn (120, 122, 124) im Rahmen einer Bearbeitung der Materialbahn (120, 122, 124), umfassend die Schritte:
a. Erfassen von ersten Messdaten (300) eines ersten Oberflächenbereichs (w1) der Materialbahn (120) unter Verwendung einer ersten Erfassungseinrichtung (150) zu einem ersten Zeitpunkt,
b. Erfassen von zweiten Messdaten eines zweiten Oberflächenbereichs (w2, w3) der Materialbahn (120, 122, 124) unter Verwendung der ersten Erfassungseinrichtung (150) zu einem nach dem ersten Zeitpunkt liegenden zweiten Zeitpunkt,
c. Bearbeiten der Materialbahn (120, 122, 124) in einem Prozessschritt,
d. Identifizieren des ersten Oberflächenbereichs (s1) auf der bearbeiteten Materialbahn (124) unter Verwendung einer zweiten Erfassungseinrichtung (160) sowie der ersten und/oder zweiten Messdaten (300),
e. Identifizieren des zweiten Oberflächenbereichs (s5, S9) auf der bearbeiteten Materialbahn (124) unter Verwendung der zweiten Erfassungseinrichtung (160), der ersten und/oder zweiten Messdaten (300) sowie des ersten und zweiten Zeitpunkts.

2. Verfahren gemäß Anspruch 1,
**dadurch gekennzeichnet,**
**dass** nach erfolgreichem Identifizieren des ersten Oberflächenbereichs (s1) unter Verwendung der ersten Messdaten (300) gemäß Verfahrensschritt d. das Identifizieren des zweiten Oberflächenbereichs (s5, s9) gemäß Verfahrensschritt e. unter Verwendung des ersten und zweiten Zeitpunkts sowie der zweiten Messdaten erfolgt.

3. Verfahren gemäß einem der vorstehenden Ansprüche,
**dadurch gekennzeichnet,**
**dass** das Identifizieren des zweiten Oberflächenbereichs (s5, S9) gemäß Verfahrensschritt e. weiterhin unter Verwendung einer Messunsicherheit bei der Ermittlung des ersten und/oder zweiten Zeitpunkts erfolgt.

4. Verfahren gemäß einem der vorstehenden Ansprüche,
**dadurch gekennzeichnet,**
**dass** im Rahmen des Prozessschritts in Verfahrensschritt c. eine Längenänderung der Materialbahn (120, 122, 124) zwischen dem ersten (w1) und zweiten Oberflächenbereich (w2, w3) erfolgt, sowie
**dass** im Rahmen des Verfahrensschritts e. die Längenänderung der Materialbahn beim Identifizieren des zweiten Oberflächenbereichs (s5, S9) berücksichtig wird.

5. Verfahren gemäß einem der vorstehenden Ansprüche,
**dadurch gekennzeichnet,**
**dass** zum Identifizieren der ersten und zweiten Oberflächenbereiche (s1, s5, S9) gemäß der Verfahrensschritte d. und e. modifizierte erste (300) und/oder zweite Messdaten verwendet werden, wobei die modifizierten ersten Messedaten vermittels einer Anwendung mindestens eines Prozess-ML-Modells (172) auf die ersten Messdaten (300), und die modifizierten zweiten Messedaten vermittels einer Anwendung des mindestens einen Prozess-ML-Modells (172) auf die zweiten Messdaten erzeugt werden.

6. Verfahren gemäß Anspruch 5,
**dadurch gekennzeichnet,**
**dass** das mindestens eine Prozess-ML-Modell (172) derart ausgebildet und eingerichtet ist, dass eine Anwendung des Prozess-ML-Modells (172) auf die ersten (300) und zweiten Messdaten eine Änderung der ersten (300) und zweiten Messdaten durch eine Auswirkung des Prozessschritts auf den ersten (w1) und zweiten Oberflächenbereich (w2, w3) simuliert oder teilweise simuliert oder eine derartige Simulation umfasst, oder,
**dass** der Prozessschritt mehrere Prozess-Teilschritte umfasst, und jedem der Prozess-Teilschritte ein Prozess-ML-Modell des mindestens einen Prozess-ML-Modells (172) zugeordnet ist, wobei jedes der Prozess-ML-Modelle derart ausgebildet und eingerichtet ist, dass eine Anwendung dieses Prozess-ML-Modelles auf die ersten (300) und zweiten Messdaten eine Änderung der ersten (300) und zweiten Messdaten durch eine Auswirkung des dem Prozess-ML-Modell zugeordneten Prozess-Teilschritts auf den ersten (w1) und zweiten Oberflächenbereich (w2, w3) simuliert oder teilweise simuliert oder eine derartige Simulation umfasst.

7. Verfahren gemäß der Ansprüche 5 oder 6,
**dadurch gekennzeichnet,**
**dass** jedes des mindestens einen Prozess-ML-Modells unter Verwendung der nachfolgenden Verfahrensschritte trainiert wurde:
Erfassen von Trainingsdaten (300) eines Oberflächenbereichs (w1) einer Trainings-Materialbahn (120, 122, 124),
Bearbeiten der Trainings-Materialbahn (120, 122, 124) oder des Oberflächenbereichs (w1) der Trainings-Materialbahn durch den Prozessschritt oder zugeordneten Prozess-Teilschritt,
Erfassen von modifizierten Trainingsdaten (400) des Oberflächenbereichs (s1),
Trainieren des Prozess-ML-Modells (172) unter Verwendung der Trainingsdaten (300) sowie der modifizierten Trainingsdaten (400),
Speichern des trainierten Prozess-ML-Modells (172).

8. System (110) zum Nachverfolgen von Orten (w1, w2, w3) auf einer Materialbahn (120, 122, 124) im Rahmen einer Bearbeitung der Materialbahn (120, 122, 124), wobei das System (110) zur Durchführung eines Verfahrens gemäß einem der vorstehenden Ansprüche ausgebildet und eingerichtet ist, das System umfassend:
eine erste Erfassungseinrichtung (150) zur Erfassung der ersten Messdaten (300) des ersten Oberflächenbereichs (w1) der unbearbeiteten Materialbahn (120) sowie des ersten Zeitpunkts, und zur Erfassung der zweiten Messdaten des zweiten Oberflächenbereichs (w2, w3) der unbearbeiteten Materialbahn (120) sowie des zweiten Zeitpunkts,
eine zweite Erfassungseinrichtung (160) zur Erfassung von Messdaten (400) bezüglich Oberflächenbereichen (s1-s9) der bearbeiteten Materialbahn (124) sowie zur Erfassung von der jeweiligen Erfassung der Oberflächenbereiche (s1-s9) jeweils zugeordneten Erfassungszeitpunkten,
eine Recheneinrichtung (170), die zum Vergleich der erfassten Messdaten (400) bezüglich der Oberflächenbereiche (s1-s9) der bearbeiteten Materialbahn (124) mit den ersten und/oder zweiten Messdaten (300), sowie zum Identifizieren des ersten und/oder zweiten Oberflächenbereichs (s1, s5, s9) gemäß der Verfahrensschritte d. und e. eines Verfahrens gemäß den vorstehend genannten Ansprüchen ausgebildet und eingerichtet ist.
